# EUROPÄISCHE PATENTANMELDUNG

(11) **EP 4 661 228 A2**
(43) Veröffentlichungstag der Anmeldung: **10.12.2025**
(21) Anmeldenummer: 25211061.4
(22) Anmeldetag: 19.04.2021
(51) Int. Cl.: H02G 15/04

(54) **EINZELROHRABDICHTUNG**

(30) Priorität: 04.05.2020 DE 102020111985
(62) Teilanmeldung aus: 21169181.1
(71) Anmelder: gabo Systemtechnik GmbH, 94559 Niederwinkling (DE)
(72) Erfinder: Geiger, Alexander, 94559 Niederwinkling (DE); Karl, Markus, 94327 Bogen (DE); Lederer, Roland, 94374 Schwarzach (DE)
(74) Vertreter: Schmid, Nils T.F.

(57) **Zusammenfassung**

Die vorliegende Erfindung betrifft eine Einzelrohrabdichtung zum Montieren an einem Endabschnitt eines starren Kunststoffrohrs, wie eines Mikrorohrs, das einen Innenkanal zum Aufnehmen von wenigstens einem Datenkabel, wie einem Glasfaserkabel, umfassend eine zumindest teilzylindrische Stülphülse, die aus einem starren Material, wie Kunststoff, gebildet ist und einen Innenraum, in den der Endabschnitt einsteckbar ist, einen den Innenraum zumindest teilweise umgebenden Hülsenmantel, eine Einstecköffnung zum axialen Einführen des Endabschnitts in den Innenraum und einen der Einstecköffnung diametral gegenüberliegenden Radialanschlag, der ein axiales Verschieben des in dem Innenraum eingesteckten Endabschnitts des Kunststoffrohres begrenzt und eine Austrittsöffnung aufweist, durch die hindurch sich das Datenkabel aus dem Innenraum axial erstrecken kann, wobei der Hülsenmantel und der Radialanschlag mit einem Längsschlitz ausgebildet sind, längs dem das Datenkabel durch radiales Einsetzen in die Stülphülse derart verlegbar ist, dass es an der Einstecköffnung, im Verlauf der gesamten Längserstreckung der Stülphülse und an der Austrittöffnung koaxial zur Längsachse der Stülphülse liegen kann, einen in den Innenraum eingesetzten, elastisch verformbaren Dichtungskörper, der einen dem Innenkanal des Kunststoffrohrs zugewandten Stirnabschnitt aufweist, der zum Abdichten des Innenkanals geformt ist, wobei zum Aufbau der Abdichtung der Dichtungskörper zwischen dem Radialanschlag und dem Endabschnitt axial verpresst ist, wobei die radiale Außenabmessung des Endabschnitts und die radiale Innenabmessung des Hülsenmantels zum Aufbau einer axialen Klemmkraft derart aufeinander abgestimmt sind, dass eine durch die axiale Verpressung erzeugte elastische Rückstellkraft des Dichtungskörpers von der Klemmkraft gehalten wird.

## Beschreibung

Die Erfindung betrifft eine Einzelrohrabdichtung zum Montieren an einem Endabschnitt eines starren Kunststoffrohrs, wie eines Mikrorohrs. Ein Mikrorohr ist ein starres Kunststoffrohr, das einen zylindrischen Außendurchmesser von 5 mm bis 80 mm und eine Wandstärke von wenigstens 1 mm aufweisen kann. Das Kunststoffrohr hat einen Innenkanal zum Aufnehmen von wenigstens einem Datenkabel, wie einem Glasfaserkabel. Eine derartige Einzelrohrabdichtung ist aus DE 10 2011 103 367 A1 offenbart. Die Offenbarung DE 10 2011 103 376 A1 soll mit Bezug hier aufgenommen sein, was die Details zu dem Kunststoffrohr, wie dem Mikrorohr, betrifft.

Die bekannte Einzelrohrabdichtung wird an einem Endabschnitt des starren Kunststoffrohres aufgesteckt, wobei ein zylindrischer Dichtungskörper von zwei Halbschalen umgeben wird. Der Dichtungskörper nimmt in seinem Innenraum den Endabschnitt des Kunststoffrohres auf und hat einen Fortsatz, der zum Freigeben einer Austrittsöffnung abtrennbar ist. Um radiale Dichtungskräfte zwischen dem Endabschnitt des Kunststoffrohres und der Innenseite des Dichtungskörpers aufzubauen, sind zwei Halbschalen, die formkomplementär ineinander greifen, vorgesehen, welche durch ein axiales Aufschieben einer sogenannten Schwalbenschwanzklemme radial aufeinander zu gedrängt werden, um den Dichtungskörper in Radialrichtung zu quetschen. Bei dieser bewährten Einzelrohrabdichtung ist bei der Herstellung eine relativ hohe Fertigungsgenauigkeit in der Radialabmessung bereitzustellen, damit eine zuverlässige Dichtung mittels der elastischen Verformung des Dichtungskörpers erreicht wird. Zudem ist die Teileanzahl aufgrund der Schwalbenschwanzklemme und den Halbschalen relativ hoch.

Es ist Aufgabe der Erfindung, die Nachteile des Standes der Technik zu überwinden, insbesondere eine Einzelzugabdichtung zum Montieren an einem Endabschnitt eines starren Kunststoffrohres, wie eines Mikrorohres, bereitzustellen, das einen Innenkanal zum Aufnehmen von wenigstens einem Datenkabel, wie Glasfaserkabel, aufweist, bei der ohne Einschränkung des Dichtungseffekts der Aufbau der Einzelrohrabdichtung vereinfacht ist.

Diese Aufgabe wird durch die Merkmale der unabhängigen Ansprüche gelöst.

Danach ist eine Einzelrohrabdichtung oder eine Einzelzugabdichtung zum Montieren an einem Endabschnitt eines starren Kunststoffrohrs, wie eines Mikrorohrs, vorgesehen. Das Mikrorohr hat einen Innenkanal zum Aufnehmen von wenigstens einem Datenkabel, wie einem Glasfaserkabel. Das Kunststoffrohr hat eine starre Rohrstruktur, um das Datenkabel vor äußeren Schlägen zu schützen. Dabei kann die Wandstärke des Kunststoffrohrs wenigstens 0,5 mm bei einem Außendurchmesser von weniger als 10 mm oder 20 mm sein. Um die Starrheit zu bilden, soll das Kunststoffrohr wenigstens eine Wandstärke von 1 mm, 1,5 mm oder 2 mm bei einem Außendurchmesser von wenigstens 20 mm aufweisen.

Die erfindungsgemäße Einzelrohrabdichtung hat eine zumindest teilzylindrische Stülphülse. Die Teilzylindrigkeit kann insbesondere dadurch realisiert sein, dass die Hülsenstruktur als solche stets zylindrisch ist, allerdings Aussparungen, wie Schlitze und ggf. Einsetzfenster, ein vollständiges Umlaufen der zylindrischen Hülse verhindert. Wenn eine Materialstruktur vorhanden ist, ist diese in Umfangsrichtung zylindrisch geformt. Es sei klar, dass die Stülphülse auch teilabschnittsförmig zylindrisch sein kann, weil vorzugsweise die Stülphülse in ihrem Materialverlauf stets zylindrisch ist. Für die Stülphülse ist ein starres Material, wie Kunststoff, ausgewählt, um einerseits eine Biegeflexibilität zu haben, andererseits, dass der Innenkanal zur Aufnahme des Datenkabels im Wesentlichen stets seine zylindrische Innenform behält, um das Datenkabel gegen Außeneinflüsse zu schützen. Es sei klar, dass der zylindrische Innenkanal durchaus im Rahmen der elastischen Verbiegung im Querschnitt geändert ist, allerdings soll aufgrund der Elastizität die zylindrische Grundform nicht veränderbar sein. Die Stülphülse hat einen Innenraum, in den der Endabschnitt einsteckbar ist. Zur Montage der Einzelrohrabdichtung wird die Stülphülse von dem Endabschnitt getrennt hergestellt und vor Ort bereitgestellt, um auf den Endabschnitt des Kunststoffrohrs aufgesteckt zu werden. Es sei klar, dass auch eine montierte Einzelrohrabdichtung von dem Gegenstand der Erfindung umfasst sein soll. Der Innenraum der Stülphülse ist bezüglich der Außenabmessung des Endabschnitts des Kunststoffrohrs formangepasst. Vorzugsweise ist der Innenraum zylindrisch, so dass er den zylindrischen Endabschnitt aufnehmen kann.

Des Weiteren hat die Stülphülse einen den Innenraum zumindest teilweise umgebenden Hülsenmantel, der insbesondere die Hülsenstruktur ausmacht. Der Hülsenmantel hat eine Wandstärke von wenigstens 0,5 mm, um der Stülphülse eine starre Struktur zu verleihen. Des Weiteren hat die Stülphülse eine Einstecköffnung zum axialen Einführen des Endabschnitts in den Innenraum, der im montierten Zustand des Endabschnitts von letzterem vollständig belegt ist. Des Weiteren hat die Stülphülse einen der Einstecköffnung diametral gegenüberliegenden Anschlag, der ein axiales Verschieben des in den Innenraum eingesteckten Endabschnitts des Kunststoffrohrs begrenzen soll. Der Radialanschlag soll verhindern, dass das im unmontierten Zustand freie Ende des Endabschnitts nicht über den Radialanschlag hinaus verschoben werden kann. Auf diese Weise ist die axiale Position der Einzelrohrabdichtung festgelegt. Des Weiteren hat der Radialanschlag, der beispielsweise als Radialwand ausgebildet ist und sich somit von der Innenseite des Hülsenmantels erstrecken kann, eine Austrittsöffnung, durch die hindurch sich das Datenkabel, das sich im Innenkanal des Kunststoffrohres befindet, aus dem Innenraum axial erstrecken kann. Die Austrittsöffnung soll eine Abmessung aufweisen, die gerade etwas größer als die Abmessung des isolierten oder unisolierten Datenkabels aufweisen. Des Weiteren sind der Hülsenmantel und der Radialanschlag mit einem Längsschlitz versehen, der sich vorzugsweise vollständig längs des gesamten Hülsenmantels erstreckt und bezüglich des vertikalen Anschlags derart radial geformt ist, dass der Längsschlitz in die Austrittsöffnung mündet. Längs dem Längsschnitt ist ein Datenkabel durch radiales Einsetzen in die Stülphülse derart verlegbar, dass es sich koaxial zur Längsachse der Stülphülse an der Einstecköffnung, im Verlauf der gesamten Längserstreckung der Stülphülse und an der Austrittsöffnung liegen kann, insbesondere ohne von dem Verlauf der Längsachse der Stülphülse abweichen zu müssen. Des Weiteren kann der Hülsenmantel mit einem in Umfangsrichtung gegenüber dem Längsschlitz in Umfangsrichtung breiteren Einsetzfenster ausgebildet sein.

Des Weiteren umfasst die Einzelrohrabdichtung einen elastisch verformbaren Dichtungskörper, der insbesondere aus einem Elastomermaterial gebildet ist. Der Dichtungskörper hat eine Pfropfenstruktur, wobei ein Radialschnitt bis zur Rotationsachsenmitte des Dichtungskörpers vorgesehen ist, um dort das Datenkabel dichtend einsetzen zu können. Der Dichtungskörper, der insbesondere rotationsförmig gebildet sein kann, ist in den Innenraum eingesetzt. Die Abmessung des Dichtungskörpers kann außenseitig zylindrisch sein und ist auf die Abmessung des Innenraums angepasst. Beispielweise kann der Dichtungskörper radial über das Einsetzfenster in den Innenraum eingesetzt werden. Alternativ oder zusätzlich kann der Dichtungskörper axial über die Einstecköffnung in den Innenraum eingesetzt werden. Beispielsweise weist der Hülsenmantel das gegenüber dem Längsschlitz in Umfangsrichtung breitere Einsetzfenster auf, vorzugsweise mündet der Längsschlitz in das breitere Einsetzfenster, das sich ausgehend von dem Längsschlitz weiten kann. Das Einsetzfenster kann durch den Radialanschlag axial begrenzt sein.

Der Dichtungskörper hat einen in dem Innenkanal des Kunststoffrohres zugewandten Stirnabschnitt, der vorzugsweise kegelstumpfförmig oder kegelförmig gebildet ist. Der Stirnabschnitt ist zum Abdichten des Innenkanals des Kunststoffrohres geformt, wobei zum Aufbau der Abdichtung, insbesondere eines umlaufenden Abdichtungskontaktes zwischen dem Stirnabschnitt und dem Innenkanal oder dem Ende des Kunststoffrohres der Dichtungskörper zwischen dem Radialanschlag und dem Endabschnitt zusammengedrückt oder gepresst ist. Erfindungsgemäß sind die radiale Außenabmessung des Endabschnitts des Kunststoffrohrs und die radiale Innenabmessung des Hülsenmantels zum Aufbau einer axialen Klemmkraft derart aufeinander abgestimmt, dass eine Klemmkraft zwischen diesen gebildet ist. Die Klemmkraft kann derart hoch ausgebildet sein, dass zumindest die durch die Verpressung erzeugte elastische Rückstellkraft des Dichtungskörpers und der Klemmkraft gehalten wird. Mit der erfindungsgemäßen Verklemmung des Hülsenmantels der Stülphülse und des zylindrischen Endabschnitts des Kunststoffrohrs wird ein Kraftschluss zwischen der Stülphülse und dem Kunststoffrohr erreicht, welcher durch Flächenklemmung der beiden zylindrischen Flächen (Außenfläche des Endabschnitts, Innenfläche des Hülsenmantels) erreicht wird, so dass die Zwischenanordnung eines Dichtungskörpers vermieden werden kann, wodurch die radiale Außenabmessung deutlich verkleinert ist. Auf diese Weise wird es möglich, die erfindungsgemäße Einzelrohrabdichtung zum Anschluss und Abdichten von Mikrorohren für die Netzwerkebene 4 einzusetzen. Der erfindungsgemäße Gedanke der Flächenverklemmung zwischen dem zylindrischen Endabschnitt des Kunststoffrohrs und der zylindrischen Innenseite des Hülsenmantels stellt eine axiale Haltekraft bereit, die sich aufgrund der Flächenreibung beider Seiten ergeben. Damit ist ein einfaches Einschieben des Endabschnitts in dem Hülsenmantel bei Überwindung der Flächenreibung einfach realisierbar und wodurch das Montieren und Demontieren deutlich vereinfacht ist. Erfindungsgemäß ist die Haftreibungs- und Gleitreibungskraft zwischen dem zylindrischen Endabschnitt und der zylindrischen Innenseite des Hülsenmantels derart aufeinander abgestimmt, dass das axiale Verpressen des Dichtungskörpers durch das Stirnende des Endabschnitts des Kunststoffrohrs gegen das Anschlagsende gehalten wird, ohne dass die elastischen Rückstellkräfte des Dichtungskörpers das Kunststoffrohr wieder aus dem Hülsenmantel und von dem Anschlagsende wegdrängt. Erfindungsgemäß ist eine erhöhte Montagehaltekraft, die beispielsweise durch eine Rasteinrichtung realisiert werden kann, nicht notwendig, um ein Einschieben des Endabschnitts bei Montage der Einzelrohrabdichtung und ein Herausziehen des Endabschnitts des Kunststoffrohrs bei Demontage der Einzelrohrabdichtung zu überwinden. Auf diese Weise kann ungeübtes Personal insbesondere ohne Spezialwerkzeug ein einfaches Demontieren und Montieren der Einzelrohrabdichtung realisieren. Es ist insofern von besonderer Bedeutung, als die Radialabmessung der Einzelrohrabdichtung lediglich eine kleine radiale Stufe zwischen der Außenabmessung des Kunststoffrohres und der außenseitigen Stülphülse aufgrund der erfindungsgemäßen Verklemmung relativ klein ist und insbesondere kleiner als 3 mm, 2 mm oder 1 mm Wandstärke der Stülphülse bedeuten kann, welche Wandstärke von dem Durchmesser des zu dichtenden Kunststoffrohres abhängt.

Zudem wird durch die erfindungsgemäße Flächenpressung der Verklemmung zwischen dem Endabschnitt und dem Hülsenmantel eine moderate axiale Haltekraft erreicht, wodurch das Material des elastischen Dichtungskörpers verletzendes Quetschen und Zerquetschen zwischen der Stirnseite des Endabschnitts und dem Anschlagende vermieden ist. Die Flächenreibungskraft, welche die axiale Haltekraft des elastisch verformten Dichtungskörpers befestigt, kann durch entsprechende Einstellung des Übermaßes zwischen der Außenseite des Endabschnitts und den Innenabmessungen des Hülsenmantels eingestellt werden.

Bei einer bevorzugten Ausführung der Erfindung ist ein radiales Flächenübermaß zwischen dem zylindrischen Endabschnitt und der zylindrischen Innenseite des Hülsenmantels, welches radiales Flächenübermaß die Normalkraft für die Flächenreibhaltekraft zum Halten der elastischen Verformung des Dichtungskörpers bereitstellt, eine kontinuierliche, insbesondere ununterbrochene Axialerstreckung von wenigstens 3 mm, 5 mm oder 7 mm oder 10 mm auf. Vorzugsweise erstreckt sich die zylindrische Flächenklemmung zwischen dem Endabschnitt und dem Hülsenmantel über zumindest 50 %, 60 %, 70 %, 80 % oder 100 % einer Gesamtstülplänge zwischen dem Endabschnitt und dem Hülsenmantel. Es sei klar, dass die Länge des Flächenübermaßes oder der Flächenklemmung in Axialrichtung auch von dem Durchmesser des Kunststoffrohrs abhängt. Beispielsweise ist die maximale Flächenklemmung zwischen dem Endabschnitt und dem Hülsenmantel bei einem Kunststoffrohraußendurchmesser von kleiner als 10 mm, kleiner als 20 mm, aber größer als 5 mm. Ein Extrapolieren bei steigendem Durchmesser und damit einhergehender steigender axiale Erstreckung der Flächenklemmung kann vorgesehen sein.

Bei einer bevorzugten Ausführung der Erfindung ist die axiale Klemmkraft zum Halten der elastischen Rückstellkraft des elastisch deformierten Dichtkörpers, dessen elastische Verformung dazu dient, einen umlaufenden Dichtungskontakt mit dem Randbereich des Innenkanals des Endabschnitts auszubilden, ausschließlich durch die Flächenklemmung aufgrund des radialen Flächenübermaßes gebildet und bereitgestellt wird. Insbesondere beim Montieren des Endabschnitts in die Stülphülse bis zum Erreichen der Montageendposition des Endabschnitts innerhalb der Stülphülse ist keine zusätzliche Verrastungskraft zu überwinden. Vielmehr ist eine konstante oder kontinuierlich zunehmende axiale Klemmkraft, die durch die Flächenklemmung gebildet ist, zu überwinden, um den Endabschnitt zu erreichen. Insbesondere ist keine Kraftfreigabe nach Überwinden einer Rastungsschwelle beim Montieren von der Bedienperson zu bewerkstelligen. Dies wird dadurch erreicht, dass die Flächenklemmung durch ein zylindrisches Flächenübermaß zwischen dem zylindrischen Endabschnitt und der zylindrischen Innenseite des Hülsenmantels gebildet ist, ohne dass über das Übermaß vorstehende Stufen oder Vorsprünge überwunden werden müssen, um die Endposition zu erhalten.

Die fehlende Verrastung insbesondere aufgrund der nur wenig radial nach außen vorstehenden Außenseite der Stülphülse vereinfacht ein Demontieren der Stülphülse von dem Kunststoffrohr.

Bei einer bevorzugten Ausführung der Erfindung erstreckt sich die zylindrische Innenseite des Hülsenmantels kontinuierlich und insbesondere ohne Radialabsatz oder einem Radialvorsprung nach radial innen oder radial außen zwischen der Einstecköffnung und dem Radialanschlag. Vorzugsweise ist die zylindrische Innenseite insbesondere ausschließlich durch das Einsetzfenster und/oder insbesondere ausschließlich durch den Längsschlitz unterbrochen, ansonsten ist die Innenseite kontinuierlich zylindrisch gebildet. Auf diese Weise ist ein rastfreier Montagevorgang bis zur Endmontageposition erreichbar, an der die notwendige elastische Deformation des Dichtungskörpers realisiert und gehalten werden kann.

Des Weiteren betrifft die Erfindung eine Einzelrohrabdichtung, die insbesondere mit der oben dargestellten Ausführung der erfindungsgemäßen Einzelrohrabdichtung kombinierbar ist oder separat davon ausgebildet ist. Die Einzelrohrabdichtung hat eine zumindest teilzylindrische Stülphülse, die aus einem starren Material, wie Kunststoff, gebildet ist und einen Innenraum, in den der Endabschnitt des Kunststoffrohrs einsteckbar ist, einen den Innenraum zumindest teilweise umgebenden Hülsenmantel, eine Einstecköffnung zum axialen Einführen des Endabschnitts in den Innenraum und einen der Einstecköffnung diametral gegenüberliegenden Radialanschlag, der ein axiales Verschieben des in den Innenraum eingesteckten Endabschnitts des Kunststoffrohrs bei dessen Montage begrenzt, um den zwischen dem Endabschnitt und dem Radialanschlag eingesetzten Dichtungskörper zusammendrücken oder verpressen zu können. Der Radialanschlag hat eine Austrittsöffnung, durch die hindurch sich das Datenkabel aus dem Innenraum axial erstrecken kann, wobei der Hülsenmantel und der Radialanschlag mit einem Längsschlitz ausgebildet sind, längs dem das Datenkabel durch radiales Einsetzen in die Stülphülse derart verlegbar ist, dass es an der Einstecköffnung, im Verlauf der gesamten Längserstreckung der Stülphülse und an der Austrittsöffnung koaxial zur Längsachse der Stülphülse liegen kann. Der Hülsenmantel kann gemäß einer beispielhaften Ausführung mit einem gegenüber dem Längsschlitz in Umfangsrichtung breiteren Einsetzfenster ausgebildet ist sein, das beispielsweise dazu eingerichtet sein kann, ein radiales Einsetzen eines Dichtungskörpers zu ermöglichen.

Des Weiteren hat die erfindungsgemäße Einzelrohrabdichtung einen elastisch verformbaren Dichtungskörper, insbesondere aus elastischem Material, wie Gummi. Beispielweise kann der Dichtungskörper radial über das Einsetzfenster in den Innenraum eingesetzt werden. Alternativ oder zusätzlich kann der Dichtungskörper axial über die Einstecköffnung in den Innenraum eingesetzt werden. Beispielsweise mündet der Längsschlitz in das breitere Einsetzfenster, das sich ausgehend von dem Längsschlitz weiten kann. Das Einsetzfenster kann durch den Radialanschlag axial begrenzt sein.

Der Dichtungskörper weist einen dem Innenkanal des Kunststoffrohres zugewandten Stirnabschnitt auf, der zum Abdichten des Innenkanals geformt ist, wobei zum Aufbau der Abdichtung der Dichtungskörper zwischen dem Radialanschlag und dem Endabschnitt axial verpresst ist. Erfindungsgemäß hat der Radialanschlag eine dem Dichtungskörper zugewandte, radiale Anlagefläche, welche konkav geformt ist. Die konkave Form hat eine Art negative Domform und ist vorzugsweise in rotationsgemäßer Form eines Trichters oder eines negativen Kegels ausgebildet. Es zeigte sich, dass mit der Trichterform eine auch radialanschlagseitige Zentrierung des Dichtungskörpers einhergeht, und eine Querspannung innerhalb des Dichtungskörpers aufgrund der Zentrierungskräfte an dem Stirnabschnitt, der mit dem Innenkanal in Eingriff kommt, vermieden ist.

Bei einer bevorzugten Ausführung ist der dem Innenkanal des Kunststoffrohres zugewandte Stirnabschnitt, der mit dem Endabschnitt in Dichtungskontakt steht, kegelförmig ausgebildet. Insbesondere hat der Stirnabschnitt eine Kegelstumpfform, wobei an dem stumpfen Ende eine Öffnung für das Datenkabel ausgebildet ist. Die kegelförmige Gestalt hat eine erste Außenneigung. Zusätzlich oder alternativ ist die Anlagefläche des Dichtungskörpers, die im montierten Zustand im Anlagekontakt mit dem Radialanschlag steht, radial plan oder eben geformt ist oder hat eine konvexe Form, insbesondere eine rotationsförmige Trichterform. Die Anlagefläche des Dichtungskörpers ist vorzugsweise formkomplementär zur Anlagefläche des Radialanschlags gestaltet, insbesondere wenn diese konkav geformt ist. Eine zweite Außenneigung der Trichterform der Anlageform ist zur ersten Außenneigung unterschiedlich. Bei einem Winkel zur Längsachse der Stülphülse ist der Winkel der zweiten Außenneigung deutlich größer als der der ersten Außenneigung.

Des Weiteren betrifft die Erfindung eine Einzelrohrabdichtung, welche mit der Ausgestaltung der oben genannten Außenrohrabdichtung kombiniert werden kann. Der auch unabhängige Aspekt der Einzelrohrabdichtung sieht eine zumindest teilzylindrische Stülphülse vor, die aus einem starren Material, wie Kunststoff, gebildet ist. Die Stülphülse weist außerdem einen Innenraum auf, in den der Endabschnitt des Kunststoffrohrs einsteckbar ist. Zudem hat die Stülphülse einen den Innenraum zumindest teilweise umgebenden Hülsenmantel, eine Einstecköffnung zum axialen Einführen des Endabschnitts in den Innenraum und einen der Einstecköffnung diametral gegenüberliegenden Radialanschlag, der ein axiales Verschieben des in dem Innenraum eingesteckten Endabschnitts des Kunststoffrohres begrenzt und eine Austrittsöffnung aufweist, durch die hindurch sich das Datenkabel aus dem Innenraum axial erstrecken kann. Der Hülsenmantel und der Radialanschlag sind mit einem Längsschlitz ausgebildet, längs dem das Datenkabel durch radiales Einsetzen in die Stülphülse derart verlagerbar ist, dass es an der Einstecköffnung, im Verlauf der gesamten Längserstreckung der Stülphülse und an der Austrittsöffnung koaxial zur Längsachse der Stülphülse liegen kann. Insofern kann sich der Längsschlitz längs der gesamten Längsausdehnung der Stülphülse erstrecken, um das koaxiale Verlegen in die Stülphülse ohne Biegungen des Datenkabels zu erreichen. Der Hülsenmantel kann mit einem gegenüber dem Längsschlitz in Umfangsrichtung breiteren Einsetzfenster ausgebildet sein, vorzugsweise mündet der Längsschlitz in das breitere Einsetzfenster, das sich ausgehend von dem Längsschlitz weitet. Das Einsetzfenster kann durch den Radialanschlag axial begrenzt sein.

Des Weiteren hat die Einzelrohrabdichtung einen elastisch verformbaren Dichtungskörper. Beispielweise kann der Dichtungskörper radial über das Einsetzfenster in den Innenraum eingesetzt werden. Alternativ oder zusätzlich kann der Dichtungskörper axial über die Einstecköffnung in den Innenraum eingesetzt werden. Der Dichtungskörper hat einen dem Innenkanal des Kunststoffrohrs zugewandten Stirnabschnitt, der zum Abdichten des Innenkanals geformt ist. Der Dichtungskörper umfasst einen mittigen, in Axialrichtung verlaufenden und durchgängigen Dichtungskanal, damit das Datenkabel sich durch den Dichtungskörper hindurch erstrecken kann. Der Dichtungskanal dient dazu, das Datenkabel vollständig zu umgreifen. Erfindungsgemäß hat der Dichtungskörper einen sich durch den Dichtungskörper hindurch hin zum Dichtungskanal erstreckenden Dichtungslängsschlitz, über den das Datenkabel radial in den Dichtungskanal einsetzbar ist. Auf diese Weise ist das Datenkabel durch eine ausschließliche radiale Montagebewegung in den Dichtungskanal einsetzbar. Ein axiales Einschieben in den Dichtungskanal ist nicht notwendig, um das Datenkabel in den Dichtungskanal zu verlegen. Des Weiteren kann der Dichtungslängsschlitz derart gegenüber dem Längsschlitz des Hülsenmantels angeordnet sein, dass er in Umfangsrichtung nicht mit dem Längsschlitz zusammenfällt. Gemäß einer beispielhaften Weiterbildung fällt der Dichtungslängsschlitz auch nicht mit dem Einsetzfenster zusammen.

Vielmehr wird der Dichtungslängsschlitz durch das ansonsten bestehende Material des Hülsenmantels geschützt. Die besonders empfindlichen Längsschlitzaußenkanten werden durch den Hülsenmantel gestützt, weil sie erfindungsgemäß nicht an dem Längsschlitz des Hülsenmantels oder ggf. dem Einsetzfenster beiliegen. Es sei klar, dass der Dichtungslängsschlitz durchaus bei der Montage des Datenkabels in den Dichtungskörper, der bereits über die Einstecköffnung oder ggf. über das Einsetzfenster in den Innenraum der Stülphülse eingesetzt ist, innerhalb des Längsschlitzes und ggf. des Einsetzfensters liegt, um bei dem anschließenden Montieren des Datenkabels das Datenkabel über den Dichtungslängsschlitz einzufügen. Allerdings wird in einem letzten Montageschritt dann der Dichtungskörper derart in Umfangsrichtung gedreht, dass der Längsschlitz von dem Material des Hülsenmantels bedeckt ist, nicht mehr mit dem Längsschlitz und ggf. dem Einsetzfenster des Hülsenmantels zusammenfällt.

Bei einer bevorzugten Ausführung der Erfindung hat der Dichtungskörper einen zylindrischen Grundkörper, dessen Außenabmessung im Wesentlichen der zylindrischen Innenabmessung des Hülsenmantels entspricht, wobei vorzugsweise die Außenabmessung des zylindrischen Grundkörpers geringfügig größer als die Innenabmessung des Hülsenmantels ist, um ein breites radiales Zusammenpressen des Dichtungskörpers zur besseren Abdichtung des Datenkabels in dem Dichtungskanal zu realisieren. Der zylindrische Grundkörper dient also dazu, vor dem Hülsenmantel in Umfangsrichtung radial umgriffen zu werden, damit bei der axialen Verpressung oder beim axialen Zusammendrücken durch das Einschieben des Endabschnitts gegen den Radialanschlag ein Ausweichen des Dichtungskörpers in Radialrichtung im Bereich des Hülsenmantels zu vermeiden. Ist ein Einsetzfenster vorgesehen, wird an dem Einsetzfenster abschnittsweise das Ausweichen nicht vermieden. Ein Dichtungslängsschlitzabschnitt des Grundkörpers ist vollständig von einem Abschnitt des Hülsenmantels bedeckt.

Insbesondere bildet der zylindrische Grundkörper die maximale Radialausdehnung und ist insbesondere an der Außenseite des Grundkörpers ohne einen Radialvorsprung ausgebildet. Es zeigte sich, dass keine abrupten, diskontinuierlichen Radialvorsprünge notwendig sind, um den elastischen Dichtungskörper ausreichend fest zu positionieren. Die Presskräfte oder Zusammendrückkräfte des Endabschnitts und des Radialanschlags reichen aus, um eine sichere Positionierung des Dichtungskörpers in Axialrichtung als auch in Umfangsrichtung sicherzustellen.

Der Grundkörper hat (in Umfangsrichtung gesehen, einen teilzylindrischen Abschnitt geringerer Radialausdehnung, indem der Dichtungslängsschlitz eingebracht ist und deren zylindrische Abmessung im Wesentlichen der Abmessung der Innenseite des Hülsenmantels entspricht. Vorzugsweise schließt an dem teilzylindrischen Abschnitt geringerer Radialerstreckung des Grundkörpers eine Radialerweiterung an. Die Radialerweiterung geht in einen im Wesentlichen weiteren teilzylindrischen Erweiterungsabschnitt über. Die Radialerweiterung kann linear durch zwei sich gegenüberliegende Flanken gebildet sein. Der teilzylindrische Erweiterungsabschnitt hat eine größere Radialausdehnung als der teilzylindrische Abschnitt, an dem der Dichtungslängsschlitz eingebracht ist. Der Radialabstand des teilzylindrischen Erweiterungsabschnitts entspricht im Wesentlichen dem Radialabstand der Außenseite des Hülsenmantels. Vorzugsweise steht der Erweiterungsabschnitt geringfügig radial über der zylindrischen Außenseite des Hülsenmantels vor und ist vorzugsweise teilzylindrisch geformt.

Vorzugsweise ist an der Außenseite des Grundkörpers des Dichtungskörpers kein diskontinuierlicher Radialvorsprung vorgesehen, sondern die jeweiligen Radialabstände nehmen kontinuierlich zu.

Vorzugsweise ist der zylindrische Grundkörper ringzylindrisch und hat eine Abmessung von wenigstens 1 mm, 2 mm oder 5 mm, ist allerdings kleiner als 10 mm in dessen Axialausdehnung. Der Grundkörper und der Stirnabschnitt sowie die Anlagefläche sind einstückig aus dem elastischen Material des Dichtungskörpers gebildet, insbesondere gespritzt. Der Dichtungslängsschlitz des Dichtungskörpers erstreckt sich sowohl durch den ringzylindrischen Grundkörper geringerer Radialausdehnung als auch durch den rotationsförmigen Stirnabschnitt als auch durch den Bereich der Anlagefläche.

Bei einer bevorzugten Ausführung der Erfindung umfasst die Stülphülse insbesondere an deren zylindrischen Außenseite wenigstens eine Nut und/oder eine Rippe, insbesondere eine wechselnde Anordnung von Nut und Rippe, um ein Greifprofil zu erhalten, an dem ohne Einsatz eines Werkzeugs, eine manuelle Griffreibung erzeugbar ist, um die Stülphülse von dem Endabschnitt des Kunststoffrohrs abzuziehen, oder die Stülphülse auf den Endabschnitt aufzuschieben und dabei die jeweilig wirkenden Reibungskräfte des zylindrischen Klemmflächeneingriffs zu überwinden. Vorzugsweise sind eine Mehrzahl an umlaufenden Nuten und/oder Rippen, insbesondere alternierend, angeordnet. Die mehreren Nuten und/oder Rippen können in Umfangsrichtung parallel zueinander vorzugsweise in einem gleichen Axialabstand zueinander umlaufen.

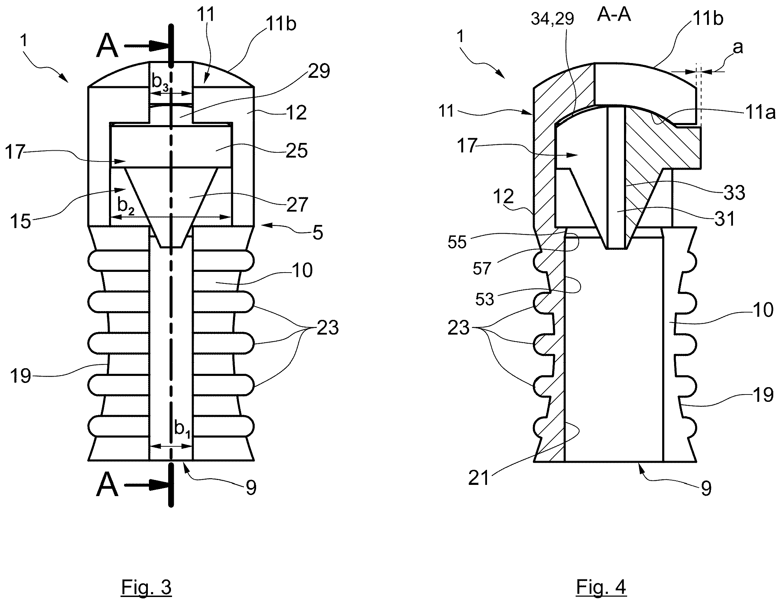

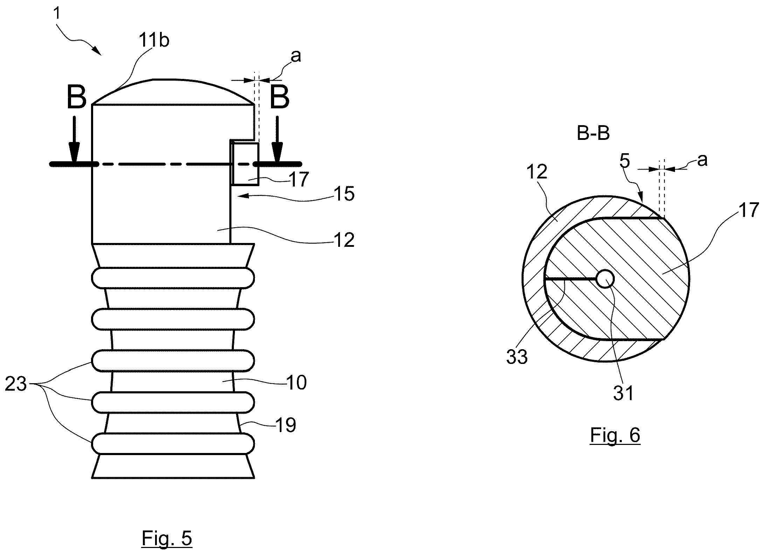

Vorzugsweise kann die Tiefe der Nuten in Axialrichtung der Stülphülse veränderlich sein, insbesondere erst zunehmen und dann abnehmen, so dass bei einer Seitenansicht der Nutboden mehrerer hintereinander angeordneter Nuten einen konkaven Verlauf zueinander bilden (Fig. 4 und 5).

Gemäß einem weiteren Aspekt der vorliegenden Erfindung, der mit den vorgehenden Aspekten und beispielhaften Ausführungen kombinierbar ist, ist eine Einzelrohrabdichtung oder eine Einzelzugabdichtung zum Montieren an einem Endabschnitt eines starren Kunststoffrohrs, wie eines Mikrorohrs, vorgesehen. Das Mikrorohr hat einen Innenkanal zum Aufnehmen von wenigstens einem Datenkabel, wie einem Glasfaserkabel. Das Kunststoffrohr hat eine starre Rohrstruktur, um das Datenkabel vor äußeren Schlägen zu schützen. Dabei kann die Wandstärke des Kunststoffrohrs wenigstens 0,5 mm bei einem Außendurchmesser von weniger als 10 mm oder 20 mm sein. Um die Starrheit zu bilden, soll das Kunststoffrohr wenigstens eine Wandstärke von 1 mm, 1,5 mm oder 2 mm bei einem Außendurchmesser von wenigstens 20 mm aufweisen.

Die erfindungsgemäße Einzelrohrabdichtung hat eine zumindest teilzylindrische Stülphülse. Die Teilzylindrigkeit kann insbesondere dadurch realisiert sein, dass die Hülsenstruktur als solche stets zylindrisch ist, allerdings Aussparungen, wie Schlitze und ggf. Einsetzfenster, ein vollständiges Umlaufen der zylindrischen Hülse verhindert. Wenn eine Materialstruktur vorhanden ist, ist diese in Umfangsrichtung zylindrisch geformt. Es sei klar, dass die Stülphülse auch teilabschnittsförmig zylindrisch sein kann, weil vorzugsweise die Stülphülse in ihrem Materialverlauf stets zylindrisch ist. Für die Stülphülse ist ein starres Material, wie Kunststoff, ausgewählt, um einerseits eine Biegeflexibilität zu haben, andererseits, dass der Innenkanal zur Aufnahme des Datenkabels im Wesentlichen stets seine zylindrische Innenform behält, um das Datenkabel gegen Außeneinflüsse zu schützen. Es sei klar, dass der zylindrische Innenkanal durchaus im Rahmen der elastischen Verbiegung im Querschnitt geändert ist, allerdings soll aufgrund der Elastizität die zylindrische Grundform nicht veränderbar sein. Die Stülphülse hat einen Innenraum, in den der Endabschnitt einsteckbar ist. Zur Montage der Einzelrohrabdichtung wird die Stülphülse von dem Endabschnitt getrennt hergestellt und vor Ort bereitgestellt, um auf den Endabschnitt des Kunststoffrohrs aufgesteckt zu werden. Es sei klar, dass auch eine montierte Einzelrohrabdichtung von dem Gegenstand der Erfindung umfasst sein soll. Der Innenraum der Stülphülse ist bezüglich der Außenabmessung des Endabschnitts des Kunststoffrohrs formangepasst. Vorzugsweise ist der Innenraum zylindrisch, so dass er den zylindrischen Endabschnitt aufnehmen kann.

Des Weiteren hat die Stülphülse einen den Innenraum zumindest teilweise umgebenden Hülsenmantel, der insbesondere die Hülsenstruktur ausmacht. Der Hülsenmantel hat eine Wandstärke von wenigstens 0,5 mm, um der Stülphülse eine starre Struktur zu verleihen. Des Weiteren hat die Stülphülse eine Einstecköffnung zum axialen Einführen des Endabschnitts in den Innenraum, der im montierten Zustand des Endabschnitts von letzterem vollständig belegt ist. Des Weiteren hat die Stülphülse einen der Einstecköffnung diametral gegenüberliegenden Anschlag, der ein axiales Verschieben des in den Innenraum eingesteckten Endabschnitts des Kunststoffrohrs begrenzen soll. Der Radialanschlag soll verhindern, dass das im unmontierten Zustand freie Ende des Endabschnitts nicht über den Radialanschlag hinaus verschoben werden kann. Auf diese Weise ist die axiale Position der Einzelrohrabdichtung festgelegt. Des Weiteren hat der Radialanschlag, der beispielsweise als Radialwand ausgebildet ist und sich somit von der Innenseite des Hülsenmantels erstrecken kann, eine Austrittsöffnung, durch die hindurch sich das Datenkabel, das sich im Innenkanal des Kunststoffrohres befindet, aus dem Innenraum axial erstrecken kann. Die Austrittsöffnung soll eine Abmessung aufweisen, die gerade etwas größer als die Abmessung des isolierten oder unisolierten Datenkabels aufweisen. Des Weiteren sind der Hülsenmantel und der Radialanschlag mit einem Längsschlitz versehen, der sich vorzugsweise vollständig längs des gesamten Hülsenmantels erstreckt und bezüglich des vertikalen Anschlags derart radial geformt ist, dass der Längsschlitz in die Austrittsöffnung mündet. Längs dem Längsschnitt ist ein Datenkabel durch radiales Einsetzen in die Stülphülse derart verlegbar, dass es sich koaxial zur Längsachse der Stülphülse an der Einstecköffnung, im Verlauf der gesamten Längserstreckung der Stülphülse und an der Austrittsöffnung liegen kann, insbesondere ohne von dem Verlauf der Längsachse der Stülphülse abweichen zu müssen. Des Weiteren kann der Hülsenmantel mit einem in Umfangsrichtung gegenüber dem Längsschlitz in Umfangsrichtung breiteren Einsetzfenster ausgebildet sein.

Des Weiteren umfasst die Einzelrohrabdichtung einen elastisch verformbaren Dichtungskörper, der insbesondere aus einem Elastomermaterial gebildet ist. Der Dichtungskörper hat eine Pfropfenstruktur, wobei ein Radialschnitt bis zur Rotationsachsenmitte des Dichtungskörpers vorgesehen ist, um dort das Datenkabel dichtend einsetzen zu können. Der Dichtungskörper, der insbesondere rotationsförmig gebildet sein kann, ist in den Innenraum eingesetzt. Die Abmessung des Dichtungskörpers kann außenseitig zylindrisch sein und ist auf die Abmessung des Innenraums angepasst. Beispielweise kann der Dichtungskörper radial über das Einsetzfenster in den Innenraum eingesetzt werden. Alternativ oder zusätzlich kann der Dichtungskörper axial über die Einstecköffnung in den Innenraum eingesetzt werden. Beispielsweise weist der Hülsenmantel das gegenüber dem Längsschlitz in Umfangsrichtung breitere Einsetzfenster auf, vorzugsweise mündet der Längsschlitz in das breitere Einsetzfenster, das sich ausgehend von dem Längsschlitz weiten kann. Das Einsetzfenster kann durch den Radialanschlag axial begrenzt sein.

Der Dichtungskörper hat einen in dem Innenkanal des Kunststoffrohres zugewandten Stirnabschnitt, der vorzugsweise kegelstumpfförmig oder kegelförmig gebildet ist. Der Stirnabschnitt ist zum Abdichten des Innenkanals des Kunststoffrohres geformt. Zum Aufbau der Abdichtung, insbesondere eines umlaufenden Abdichtungskontaktes zwischen dem Stirnabschnitt und dem Innenkanal oder dem Ende des Kunststoffrohres der Dichtungskörper zwischen dem Radialanschlag und dem Endabschnitt, kann der Dichtungskörper zusammengedrückt oder gepresst werden.

Gemäß dem weiteren erfindungsgemäßen Aspekt weist der Hülsenmantel eine zumindest teilzylindrische Innenfläche auf, die dem Innenraum zugewandt ist bzw. den Innenraum begrenzt. An der Innenumfangsfläche des Hülsenmantels ist eine Montagehilfe vorgesehen, die dazu eingerichtet ist, einer Bedienperson bei der Montage des Kunststoffrohrs in den Innenraum einen zusätzlichen Montagewiderstand mitzuteilen. Der Montagewiderstand ist entgegen einer axialen Montagerichtung des Kunststoffrohrs in den Innenraum gerichtet. Bei der Montage des Kunststoffrohrs in die Einzelzugabdichtung führt die Bedien- bzw. Montageperson, die ggf. ungeübt ist, die Stülphülse auf das Ende des Kunststoffrohrs und muss den zusätzlichen Montagewiderstand überwinden, um die Stülphülse und das Mikrorohr aneinander zu montieren. Es kann eine Montageanweisung geben, die der Bedienperson mitteilen kann, dass dieser zusätzliche Montagewiderstand überwunden werden muss. Der zusätzliche Montagewiderstand, der zum Montieren überwunden werden muss, dient dazu, den Dichtungskörper kontrolliert gegen die Anschlagsfläche der Stülphülse zu drücken und damit zu verpressen. Auf diese Weise kann gewährleistet werden, dass ein Dichtkontakt zwischen dem anschlagsseitigen Dichtungskörperende und dem Innenendrand des Kunststoffrohrs gebildet wird. Auch ungeübtes Bedienpersonal kann somit eine sichere Abdichtung des Dichtungskörpers an dem Innenkanal des Mikrorohres gewährleisten. Gemäß einer beispielhaften Weiterbildung kann an einer Außenseite der Stülphülse, die transparent ausgebildet sein kann, eine Markierung vorgesehen sein, die ggf. von dem Mikrorohrende eingenommen werden muss, um ein ausreichendes Verpressen des Dichtungskörpers herzustellen. Somit ist eine Montageendposition visuell gekennzeichnet.

In einer beispielhaften Ausführung der erfindungsgemäßen Einzelrohrabdichtung ist die Montagehilfe durch einen wenigstens teilweise in Umfangsrichtung umlaufenden, in Richtung des Innenraums vorstehenden Vorsprung gebildet. Der Vorsprung kann beispielsweise an der Innenumfangsfläche des Hülsenmantels im Wesentlichen vollständig umlaufend realisiert sein und sich zwischen den Schlitzrändern in dem Hülsenmantel erstrecken. Gemäß einer alternativen Ausführung der erfindungsmäßen Einzelrohrabdichtung ist die Montagehilfe, die den zusätzlichen Montagewiderstand bereitstellt, durch eine die Haftreibungskraft erhöhende Beschichtung an der Innenumfangsfläche des Hülsenmantels realisiert. Dies kann beispielsweise durch eine Aufrauung des Hülsenmantels und/oder durch eine zusätzliche Aufbringung eines Materials, das den Haftreibungswiderstand erhöht, erfolgen.

In einer weiteren beispielhaften Ausführung ist der Vorsprung dazu eingerichtet, sich bei der Montage des Kunststoffrohrs in dieses einzukrallen. Der Vorsprung kann so gestaltet sein, dass er sich in das Kunststoffrohr wenigstens minimal einschneidet. Eine ungewollte Demontage von Mikrorohr und Stülphülse kann damit vermieden werden. Der Vorsprung kann ferner derart eingerichtet sein, dass der durch den Vorsprung aufgebaute zusätzliche Demontagewiderstand größer ist als der durch diesen aufgebaute zusätzliche Montagewiderstand. Gemäß einer beispielhaften Weiterbildung kann der Einkrallvorsprung spitz zulaufend geformt sein. Dabei kann die Einkrallvorsprungsspitze in Radialrichtung weisen. Des Weiteren kann der Einkrallvorsprung im Wesentlichen dreieckförmig bzw. zackenartig gebildet sein. Mittels der Einkrallvorsprungsspitze kann der Einkrallvorsprung sich bei einer Relativbewegung von Kunststoffrohr und Stülphülse in Demontagerichtung in den äußeren Mantel des Kunststoffrohrs einkrallen bzw. einschneiden. Gemäß einer weiteren beispielhaften Ausführung kann der Einkrallvorsprung eine in einem spitzen Winkel bezüglich der Innenumfangsfläche der Stülphülse orientierte Einkrallflanke aufweisen. Die Einkrallflanke kann so geformt sein, dass der zusätzliche Montagewiderstand kontinuierlich beim aufeinander Aufschieben von Kunststoffrohr und Stülphülse zunimmt. Ferner kann die geneigte Einkrallflanke den Effekt des Einkrallens des Einkrallvorsprungs verstärken.

Gemäß einem weiteren Aspekt der vorliegenden Erfindung, der mit den vorgehenden Aspekten und beispielhaften Ausführungen kombinierbar ist, ist eine Einzelrohrabdichtung oder eine Einzelzugabdichtung zum Montieren an einem Endabschnitt eines starren Kunststoffrohrs, wie eines Mikrorohrs, vorgesehen. Das Mikrorohr hat einen Innenkanal zum Aufnehmen von wenigstens einem Datenkabel, wie einem Glasfaserkabel. Das Kunststoffrohr hat eine starre Rohrstruktur, um das Datenkabel vor äußeren Schlägen zu schützen. Dabei kann die Wandstärke des Kunststoffrohrs wenigstens 0,5 mm bei einem Außendurchmesser von weniger als 10 mm oder 20 mm sein. Um die Starrheit zu bilden, soll das Kunststoffrohr wenigstens eine Wandstärke von 1 mm, 1,5 mm oder 2 mm bei einem Außendurchmesser von wenigstens 20 mm aufweisen.

Die erfindungsgemäße Einzelrohrabdichtung hat eine zumindest teilzylindrische Stülphülse. Die Teilzylindrigkeit kann insbesondere dadurch realisiert sein, dass die Hülsenstruktur als solche stets zylindrisch ist, allerdings Aussparungen, wie Schlitze und ggf. Einsetzfenster, ein vollständiges Umlaufen der zylindrischen Hülse verhindert. Wenn eine Materialstruktur vorhanden ist, ist diese in Umfangsrichtung zylindrisch geformt. Es sei klar, dass die Stülphülse auch teilabschnittsförmig zylindrisch sein kann, weil vorzugsweise die Stülphülse in ihrem Materialverlauf stets zylindrisch ist. Für die Stülphülse ist ein starres Material, wie Kunststoff, ausgewählt, um einerseits eine Biegeflexibilität zu haben, andererseits, dass der Innenkanal zur Aufnahme des Datenkabels im Wesentlichen stets seine zylindrische Innenform behält, um das Datenkabel gegen Außeneinflüsse zu schützen. Es sei klar, dass der zylindrische Innenkanal durchaus im Rahmen der elastischen Verbiegung im Querschnitt geändert ist, allerdings soll aufgrund der Elastizität die zylindrische Grundform nicht veränderbar sein. Die Stülphülse hat einen Innenraum, in den der Endabschnitt einsteckbar ist. Zur Montage der Einzelrohrabdichtung wird die Stülphülse von dem Endabschnitt getrennt hergestellt und vor Ort bereitgestellt, um auf den Endabschnitt des Kunststoffrohrs aufgesteckt zu werden. Es sei klar, dass auch eine montierte Einzelrohrabdichtung von dem Gegenstand der Erfindung umfasst sein soll. Der Innenraum der Stülphülse ist bezüglich der Außenabmessung des Endabschnitts des Kunststoffrohrs formangepasst. Vorzugsweise ist der Innenraum zylindrisch, so dass er den zylindrischen Endabschnitt aufnehmen kann.

Des Weiteren hat die Stülphülse einen den Innenraum zumindest teilweise umgebenden Hülsenmantel, der insbesondere die Hülsenstruktur ausmacht. Der Hülsenmantel hat eine Wandstärke von wenigstens 0,5 mm, um der Stülphülse eine starre Struktur zu verleihen. Des Weiteren hat die Stülphülse eine Einstecköffnung zum axialen Einführen des Endabschnitts in den Innenraum, der im montierten Zustand des Endabschnitts von letzterem vollständig belegt ist. Des Weiteren hat die Stülphülse einen der Einstecköffnung diametral gegenüberliegenden Anschlag, der ein axiales Verschieben des in den Innenraum eingesteckten Endabschnitts des Kunststoffrohrs begrenzen soll. Der Radialanschlag soll verhindern, dass das im unmontierten Zustand freie Ende des Endabschnitts nicht über den Radialanschlag hinaus verschoben werden kann. Auf diese Weise ist die axiale Position der Einzelrohrabdichtung festgelegt. Des Weiteren hat der Radialanschlag, der beispielsweise als Radialwand ausgebildet ist und sich somit von der Innenseite des Hülsenmantels erstrecken kann, eine Austrittsöffnung, durch die hindurch sich das Datenkabel, das sich im Innenkanal des Kunststoffrohres befindet, aus dem Innenraum axial erstrecken kann. Die Austrittsöffnung soll eine Abmessung aufweisen, die gerade etwas größer als die Abmessung des isolierten oder unisolierten Datenkabels aufweisen. Des Weiteren sind der Hülsenmantel und der Radialanschlag mit einem Längsschlitz versehen, der sich vorzugsweise vollständig längs des gesamten Hülsenmantels erstreckt und bezüglich des vertikalen Anschlags derart radial geformt ist, dass der Längsschlitz in die Austrittsöffnung mündet. Längs dem Längsschnitt ist ein Datenkabel durch radiales Einsetzen in die Stülphülse derart verlegbar, dass es sich koaxial zur Längsachse der Stülphülse an der Einstecköffnung, im Verlauf der gesamten Längserstreckung der Stülphülse und an der Austrittsöffnung liegen kann, insbesondere ohne von dem Verlauf der Längsachse der Stülphülse abweichen zu müssen. Des Weiteren kann der Hülsenmantel mit einem in Umfangsrichtung gegenüber dem Längsschlitz in Umfangsrichtung breiteren Einsetzfenster ausgebildet sein.

Des Weiteren umfasst die Einzelrohrabdichtung einen elastisch verformbaren Dichtungskörper, der insbesondere aus einem Elastomermaterial, wie Gummi, gebildet ist. Der Dichtungskörper hat eine Pfropfenstruktur, wobei ein Radialschnitt bis zur Rotationsachsenmitte des Dichtungskörpers vorgesehen ist, um dort das Datenkabel dichtend einsetzen zu können. Der Dichtungskörper, der insbesondere rotationsförmig gebildet sein kann, ist in den Innenraum eingesetzt. Die Abmessung des Dichtungskörpers kann außenseitig zylindrisch sein und ist auf die Abmessung des Innenraums angepasst. Beispielweise kann der Dichtungskörper radial über das Einsetzfenster in den Innenraum eingesetzt werden. Alternativ oder zusätzlich kann der Dichtungskörper axial über die Einstecköffnung in den Innenraum eingesetzt werden. Beispielsweise weist der Hülsenmantel das gegenüber dem Längsschlitz in Umfangsrichtung breitere Einsetzfenster auf, vorzugsweise mündet der Längsschlitz in das breitere Einsetzfenster, das sich ausgehend von dem Längsschlitz weiten kann. Das Einsetzfenster kann durch den Radialanschlag axial begrenzt sein. Der Dichtungskörper hat einen in dem Innenkanal des Kunststoffrohres zugewandten Stirnabschnitt, der vorzugsweise kegelstumpfförmig oder kegelförmig gebildet ist. Der Stirnabschnitt ist zum Abdichten des Innenkanals des Kunststoffrohres geformt. Zum Aufbau der Abdichtung, insbesondere eines umlaufenden Abdichtungskontaktes zwischen dem Stirnabschnitt und dem Innenkanal oder dem Ende des Kunststoffrohres der Dichtungskörper zwischen dem Radialanschlag und dem Endabschnitt, kann der Dichtungskörper zusammengedrückt oder gepresst werden.

Gemäß dem weiteren Aspekt der vorliegenden Erfindung umfasst der Dichtungskörper einen radialanschlagsseitigen Versteifungsabschnitt. Der Versteifungsabschnitt erhöht die Steifigkeit des Dichtungskörpers, um die Presskräfte besser zu tolerieren, insbesondere derart, dass der Dichtungskörper nicht seitlich radial aus dem Innenraum der Stülphülse herausgequetscht wird. Erfindungsgemäß wurde herausgefunden, dass dies durch eine radialanschlagsseitige Verfestigung des Elastomer-Dichtungskörpers gewährleistet werden kann.

In einer weiteren beispielhaften Ausführung der erfindungsgemäßen Einzelrohrabdichtung sind der Dichtungskörper und der Versteifungsabschnitt mittels eines zwei Komponentenspritzgießverfahrens hergestellt. Auf diese Weise ist es auf herstellungstechnisch einfache Art und Weise möglich, einen versteiften Dichtungskörper bereitzustellen, der erhöhte Presskräfte aufnehmen kann und/oder weniger dazu tendiert, sich aus dem Innenraum herausdeformieren und/oder herausquetschen zu lassen. Insbesondere besteht der Versteifungsabschnitt aus einem Material höherer Festigkeit als der restliche Grundkörper des Dichtungskörpers, beispielsweise aus einem härteren Kunststoff-Material. Beispielsweise besitzt das Material des Versteifungsabschnitts einen geringeren Elastizitätsgrad und/oder ist weniger stark deformierbar, insbesondere zusammenpressbar.

Gemäß einer beispielhaften Weiterbildung der erfindungsgemäßen Einzelrohrabdichtung ist der Versteifungsabschnitt als ebenes Plättchen ausgebildet und in seiner Form an eine radialanschlagsseitige Stirnfläche des Dichtungskörpers angepasst. Somit ist im Wesentlichen eine ebene Grenzfläche zwischen Versteifungsabschnitt-Plättchen und Dichtungskörper-Grundkörper gebildet. Die Deformation beim axialen Zusammenpressen des Dichtungskörpers wird im Wesentlichen durch den Grundkörper erfolgen, während der Versteifungsabschnitt deutlich weniger beim Zusammenquetschen deformiert wird und für die Steifigkeit bzw. Formgetreuheit verantwortlich ist, sodass der Dichtungskörper zuverlässig in dem Innenhohlraum verbleibt.

In einer weiteren beispielhaften Ausführung der vorliegenden Erfindung, die in Bezug auf alle erfindungsgemäßen Aspekte relevant ist, kann der Hülsenmantel mit einem gegenüber dem Längsschnitt in Umfangsrichtung breiteren Einsetzfenster ausgebildet sein. Beispielsweise ist das Einsetzfenster derart dimensioniert und/oder sind das Einsetzfenster und der Dichtungskörper derart aufeinander formabgestimmt, dass der Dichtungskörper radial über das Einsetzfenster in den Innenraum einsetzbar ist. Dadurch ist unter anderem ermöglicht, dass der Dichtungskörper in eine bereits mit einem Kunststoffrohr belegte Stülphülse radial über das Einsetzfenster montiert werden kann. Eine Demontage des Kunststoffrohrs und insbesondere des damit verlegten Datenkabels ist nicht notwendig.

Gemäß einer weiteren beispielhaften Ausführung der erfindungsgemäßen Einzelrohrabdichtung, die für sämtliche erfindungsgemäßen Aspekte der Einzelrohrabdichtungen relevant sein kann, weist der Längsschlitz eine konstante Schlitzbreite über seine gesamte Längserstreckung auf. Für den Fall, dass die Einzelrohrabdichtung ein Einsetzfenster besitzt, kann der ansonsten konstante Längsschlitz sprunghaft in das Einsatzfenster übergehen. Dies bedeutet, dass sich eine Öffnungsbreite am Übergang des Längsschlitzes in das am Einsatzfenster sprunghaft vergrößert. In Bezug auf die Dimensionierung der Schlitzbreite besteht ein Interessenskonflikt zwischen einfacher Montage und Betriebssicherheit. Es muss zum einen gewährleistet werden, dass die radial zu verlegenden Datenkabel radial einsetzbar sind. Gleichzeitig darf die Schlitzbreite nicht so groß bemessen sein, dass das Datenkabel ungewollt radial aus der Stülphülse über den Schlitz herausgedrückt wird. Die Erfinder der vorliegenden Erfindung haben herausgefunden, dass ein Optimum dann erreicht werden kann, wenn eine Schlitzbreite etwa 5% bis 60%, insbesondere etwa 7% bis 55%, etwa 10 % bis 50% oder etwa 15% bis 45%, eines Außendurchmessers des Kunststoffrohrs beträgt. Die Obergrenzen können beispielsweise so gewählt sein, dass das Datenkabel mit dem größten Außendurchmesser gerade noch über den Längsschlitz montierbar ist. Insofern ist es möglich, die Obergrenzen mit einem Puffer zu versehen, beispielsweise um ca. 5% größer zu dimensionieren. Beispielhafte Abmessungen können wie folgt sein: Bei einem Außendurchmesser von 7 mm des Kunststoffrohrs sind Kabeldurchmesser und damit Schlitzbreiten von 0,5 bis 3,0 mm, für Kunststoffrohraußendurchmesser von 10 mm sind Datenkabel von 1,5 mm bis 4,5 mm und für Kunststoffrohraußendurchmesser von 12 mm sind Datenkabel mit einem Durchmesser von bis zu 5 mm oder 6,5 mm relevant. Ferner können bei einem Außendurchmesser von 5 mm oder 6 mm des Kunststoffrohrs Kabeldurchmesser und damit Schlitzbreiten von 0,5 bis 2,5 mm relevant sein, für Kunststoffrohraußendurchmesser von 8 mm Kabeldurchmesser von 1,0 mm bis 5,0 mm.Insbesondere hat sich als vorteilhaft erwiesen, eine Schlitzbreite von mindestens 6,5 mm zu wählen, damit sämtliche Kabel unabhängig vom zu verlegenden Kunststoffrohr-Durchmesser, nachdem sie bereits angeschlossen sind, nachträglich in die Stülphülse radial montiert werden können. Wesentlich für den vorliegenden Entwicklungsgegenstand kann ferner die maximale Schlitzbreite sein, die die Erfinder der vorliegenden Erfindung auf maximal 10 mm, insbesondere 9,8 mm, bei dem 12 mm-Kunststoffrohr-Durchmesser definiert haben, um auch bei hohen axialen Druckkräften auf den Dichtungskörper zu gewährleisten, dass dieser nicht radial seitlich aus der Stülphülse herausgedrückt wird.

Gemäß einer weiteren beispielhaften Ausführung der vorliegenden Erfindung, die für sämtliche erfindungsgemäßen Aspekte der Einzelrohrabdichtungen relevant sein kann, kann die Stülphülse im Wesentlichen zwei Axialabschnitte besitzen, nämlich einen die Anschlagfläche aufweisenden Axialpressabschnitt und einen daran anschließenden Radialpressabschnitt. In dem Axialpressabschnitt kann das optionale Einsetzfenster ausgebildet sein. In dem Radialpressabschnitt, insbesondere am Übergang zwischen Radialpressabschnitt und Axialpressabschnitt, kann die Montagehilfe angeordnet sein, die insbesondere als Einkrallvorsprung geformt sein kann. In dem Radialpressabschnitt liegt ein Untermaß der Innendimensionierung der Stülphülse gegenüber der Außendimensionierung des Kunststoffrohrs und damit eine Presspassung vor. Im axial dahinterliegenden Axialpressabschnitt liegt ein Übermaß der Stülphülseninnendimensionierung gegenüber der Kunststoffrohraußendimensionierung vor. Es wurde erfindungsgemäß herausgefunden, dass der minimalste Innendurchmesser der Stülphülse im Bereich des zuerst mit dem Mikrorohr in Kontakt kommenden Stülphülsenabschnitts, nämlich dem Radialpressabschnitt, vorliegen soll, insbesondere in welchem der Einkrallvorsprung angeordnet ist. Dadurch kann die Wirkung des Einkrallvorsprungs zuverlässig entfaltet werden.

In einer weiteren beispielhaften Ausführung der erfindungsgemäßen Einzelrohrabdichtung ist die Einzelrohrabdichtung dazu ausgebildet, eine Dichtigkeit zwischen Dichtungskörper und Kunststoffrohr und/oder zwischen Dichtungskörper und Datenkabel gegenüber einem Innendruck, vorzugsweise gegen eine Flüssigkeit, von bis zu 1 bar, vorzugsweise bis zu 0,75 bar, vorzugsweise bis zu 0,5 bar, innerhalb des Kunststoffrohrs bereitzustellen. Zur Dichtigkeits- bzw. Druckprüfung kann die Einzelrohrabdichtung mit montiertem Kunststoffrohr und gegebenenfalls Datenkabel unter Wasser gehalten und mit einem gewünschten Innendruck, beispielsweise von 0,5 bar, in dem Kunststoffrohr beaufschlagt werden.

Des Weiteren betrifft die Erfindung ein Kunststoffrohr, wie ein Mikrorohr, das einen Innenkanal zum Aufnehmen von wenigstens einem Datenkabel, wie einem Glasfaserkabel, aufweist. Das Kunststoffrohr hat eine erfindungsgemäße Einzelrohrabdichtung, die an einem Endabschnitt des Kunststoffrohres montiert ist, wobei insbesondere die Einzelrohrabdichtung auf dem Endabschnitt in Axialrichtung aufschiebbar ist. Die Montageposition wird dann erreicht, wenn der elastische Dichtungskörper in Axialrichtung verpresst oder zusammengedrückt ist, um die Dichtungsflächen umlaufend zu realisieren. Der zylindrische Klemmflächeneingriff ist derart ausgelegt, dass die elastischen Rückstellkräfte des deformierten Dichtungskörpers gehalten werden können.

Weitere Vorteile, Eigenschaften und Merkmale der Erfindung werden durch die folgende Beschreibung einer bevorzugten Ausführung der Erfindung anhand der beiliegenden Zeichnungen deutlich, in denen zeigen:
- Fig. 1: eine perspektivische Ansicht einer beispielhaften Ausführung einer erfindungsgemäßen unmontierten Einzelrohrabdichtung mit eingesetztem erfindungsgemäßen Dichtungskörper;
- Fig. 2: eine perspektivische Ansicht der Einzelrohrabdichtung aus Figur 1 mit eingesetztem Dichtungskörper und an einem Kunststoffrohr montiert;
- Fig. 3: eine Längsansicht der Einzelzugabdichtung mit eingesetztem Dichtungskörper;
- Fig. 4: eine Querschnittsansicht der Einzelzugabdichtung nach Fig. 3 entlang der Achse A-A;
- Fig. 5: eine Längsansicht der Einzelzugabdichtung nach Fig. 3, wobei die Einzelzugabdichtung um 90° nach rechts gedreht ist;
- Fig. 6: eine Querschnittsansicht der Einzelzugabdichtung nach Fig. 5 entlang der Schnittlinie B-B;
- Fig. 7: eine Längsansicht einer weiteren beispielhaften Ausführung einer erfindungsgemäßen Einzelzugabdichtung mit eingesetztem Dichtungskörper;
- Fig. 8: eine perspektivische Ansicht der Einzelrohrabdichtung aus Fig. 7;
- Fig. 9: eine Längsansicht einer weiteren beispielhaften Ausführung einer erfindungsgemäßen Einzelzugabdichtung mit eingesetztem Dichtungskörper;
- Fig. 10: eine perspektivische Ansicht der Einzelrohrabdichtung aus Fig. 9 mit eingesetztem Dichtungskörper und an einem Kunststoffrohr montiert;
- Fig. 11: eine perspektivische Ansicht eines Dichtungskörpers für eine erfindungsgemäße Einzelrohrabdichtung von oben;
- Fig. 12: eine perspektivische Ansicht von unten auf den Dichtungskörper nach Fig. 11;
- Fig. 13: eine perspektivische Ansicht einer weiteren beispielhaften Ausführung eines Dichtungskörpers für eine erfindungsgemäße Einzelrohrabdichtung von oben;
- Fig. 14: eine perspektivische Ansicht von unten des Dichtungskörpers nach Fig. 13;
- Fig. 15: eine Längs-Schnittansicht einer weiteren beispielhaften Ausführung einer Stülphülse einer erfindungsgemäßen Einzelrohrabdichtung;
- Fig. 16: eine perspektivische Ansicht der erfindungsgemäßen Einzelrohrabdichtung nach Fig. 15 mit montiertem Dichtungskörper;
- Fig. 17: eine Längsansicht der Einzelrohrabdichtung aus Fig. 16; und
- Fig. 18: eine schematische Prinzipsskizze zur Dichtigkeitsprüfung für erfindungsgemäße Einzelrohrabdichtungen.

In den Figuren sind beispielhafte Ausführungen von erfindungsgemäßen Einzelrohrabdichtungen 1 zum Montieren an einem Endabschnitt 4 eines Kunststoffrohrs 3 gezeigt, das einen Innenkanal (nicht näher dargestellt) zum Aufnehmen eines Datenkabels (nicht dargestellt), wie eines Glasfaserkabels, aufweist.

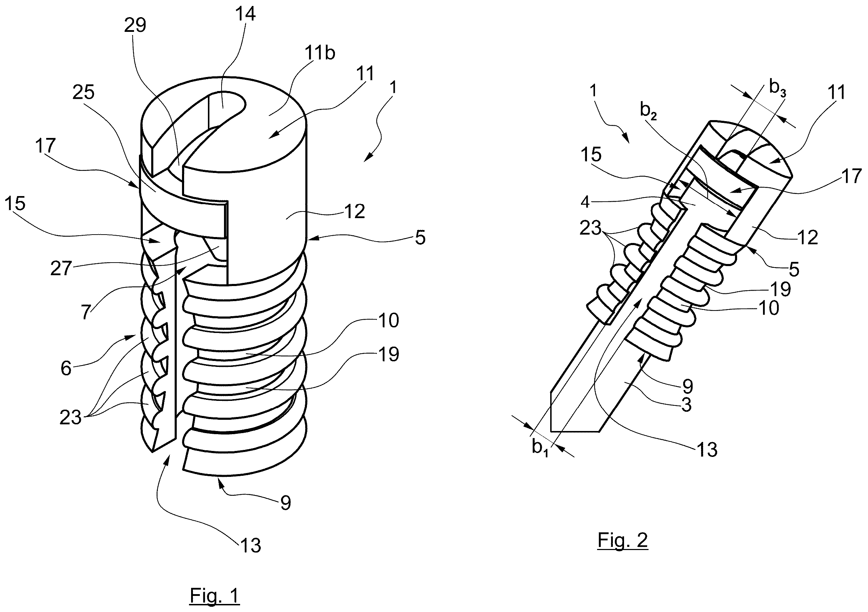

Im Folgenden wird zunächst auf die perspektivischen Darstellungen der Einzelrohrabdichtung 1 in Fig. 1 und 2 Bezug genommen. Die Einzelrohrabdichtung 1 umfasst eine Stülphülse 5 aus einem starren Material, wie Kunststoff oder Metall, in dessen Innenraum 7 der Kunststoffrohrendabschnitt 4 aufgenommen werden kann, was in Fig. 2 abgebildet ist. Die Stülphülse 5 umfasst einen Hülsenmantel 6, der einen Hülsengreifabschnitt 10 und einen an den Hülsengreifabschnitt 10 angrenzenden Hülsenfensterabschnitt 12 umfasst. Der Hülsengreifabschnitt 10 weist in Axialrichtung ein offenes axiales Stülpende 9 auf, das bei der Montage axial auf den Kunststoffrohrendabschnitt 4 aufgeschoben und aufgestülpt wird. Dabei sind die Außenabmessungen des Kunststoffrohres 3 und des Innenraums 7 der Stülphülse 5 derart aufeinander abgestimmt sind, dass ein Formschluss zwischen der Stülphülse 5 und dem Kunststoffrohr 3 realisiert ist. Dieser Formschluss ist eine zylindrische Flächenklemmung, welche aufgrund eines flächigen Übermaßes zwischen dem Endabschnitt 4 und der zylindrischen Innenseite des Hülsenmantels 6 gebildet ist. Die Flächenklemmung erstreckt sich über den Großteil der Stülphülse 5 (mehr als 50 % der Gesamtlänge). Die zylindrische Flächenklemmung dient dazu, Axialkräfte, die auf der Stülphülse wirken, aufzunehmen, ohne dass ein Verrutschen des Endabschnitts 4 gegenüber der Stülphülse 5 einhergeht. Dadurch ist gewährleistet, dass im montierten, zusammengesetzten Zustand eine Relativbewegung, insbesondere eine axiale Relativbewegung, zwischen Kunststoffrohr 3 und Stülphülse 5 weitestgehend unterbunden ist oder nur durch Aufbringung einer äußeren Kraft möglich ist. Ferner ist die Stülphülse 5, insbesondere der Hülsenfensterabschnitt 12, mit einem dem Stülpende 9 diametral gegenüberliegenden, axialen Radialanschlagsende 11 ausgebildet, dessen Innenanschlagsfläche 11a die axiale Montage-Relativbewegung zwischen Stülphülse 5 und Kunststoffrohr 3 begrenzt, insbesondere ein vollständiges Hindurchschieben des Kunststoffrohrs 3 durch die Stülphülse 5 verhindert.

Die Stülphülse 5 ist zum Verlegen des in dem Kunststoffrohr 3 geführten wenigstens einen Datenkabels in den Innenraum 7 der Stülphülse 5 in Längsrichtung vollständig geschlitzt. Der Längsschlitz 13 verläuft axial an der Außenumfangsfläche der Stülphülse 5 und zumindest in dem Hülsenfensterabschnitt 12 sprunghaft weitend, um ein Einsetzfenster 15 bereitzustellen, in das ein elastischer Dichtungskörper 17, vorzugsweise aus Gummimaterial, eingesetzt wird. Alternativ kann der Dichtungskörper 17 auch über die Einstecköffnung 9 in den Innenraum 7 axial eingesetzt bzw. eingeschoben werden.

Der Längsschlitz 13 weist im Bereich des Hülsengreifabschnitts 12 in Umfangsrichtung der Stülphülse 5 vorzugsweise eine Breite b1 von ca. 3 mm und im Bereich des Hülsenfensterabschnitts 12 vorzugsweise eine Breite b2 von ca. 6 mm auf. Der aufgeweitete Schlitzbereich im Hülsenfensterabschnitt 12 ist derart bemessen, dass der Dichtungskörper 17 vollständig in den Innenraum 7 der Stülphülse 5 eingesetzt werden kann, wobei insbesondere die Breite des Längsschlitzes 13 in Umfangsrichtung einem Außendurchmesser des Dichtungskörpers 17 entspricht. Der Außendurchmesser des Dichtungskörpers 17 kann aufgrund dessen elastischen Materials auch geringfügig größer ausgebildet sein. Somit ist gewährleistet, dass der Dichtungskörper 17 in dem Innenraum 7 der Stülphülse 5 aufgenommen bleibt. Der Längsschlitz 13 erstreckt sich in Längsrichtung vollständig durch die Stülphülse 5 und verringert seine Breite b3 an dem Anschlagende 11 sprunghaft, insbesondere zurück auf die am Stülpende 9 ausgebildete Breite b1. Der Radialanschlag 11 ist bis auf den sich radial, insbesondere bis zum Mittelpunkt des Radialanschlags 11, durch dieses erstreckenden Längsschlitz 13 vollflächig ausgebildet. Wie bereits in Fig. 1 und 2 angedeutet ist, weisen die Innenanschlagsfläche 11a und eine Außenanschlagfläche 11b des Radialanschlags 11 eine gekrümmte Form auf, wobei insbesondere die Innenanschlagfläche 11a konkav und die Außenanschlagfläche 11b konvex ausgebildet ist. Die sich so ergebende Dom- oder Kuppelform des Anschlagendes 11 geht insbesondere beim Auftreten von axialen Montagequetsch- oder -presskräften des elastischen Dichtungskörpers 17 mit einer Zentrierung desselben innerhalb der Stülphülse 5 einher. Montagepresskräfte treten auf, wenn das Kunststoffrohr 3 gegen den Dichtungskörper 17 bzw. das Anschlagsende 11 gepresst wird.

Der Hülsenaxialabschnitt 10 des Hülsenmantels 6 weist in Axialrichtung eine gekrümmte, insbesondere konkave, Mantelaußenfläche 19 und eine im Wesentlichen geradlinige, insbesondere parallel zur Axialrichtung verlaufende, Mantelinnenfläche 21 auf, was in Fig. 3 und 4 zu sehen ist. Dadurch ergibt sich eine in Axialrichtung variierende Wandstärke des Hülsengreifabschnitts 10, wobei insbesondere die Wandstärke von einem axialen Ende des Hülsengreifabschnitts 10 zur Mitte hin abnimmt und ab der Mitte insbesondere bis zur ursprünglichen Wandstärke wieder zunimmt. Ferner weist der Hülsengreifabschnitt 10 an dessen Mantelaußenfläche sich im Wesentlichen radial erstreckende, in Axialrichtung insbesondere gleichmäßig verteilte, umlaufende Rippen 23 auf, um ein besseres Greifen der Stülphülse 5 zu erlauben. In einer bevorzugten Ausführungsform der Erfindung sind mehr als drei oder vier oder fünf Radialrippen 23 vorgesehen. Es ist klar, dass sich die Rippen 23 nicht in den Bereich des Linearschlitzes 13 erstrecken, um das Verlegen der Datenkabel zu gewährleisten. Vorzugsweise sind die Rippen 23 ringförmig ausgebildet und weisen die gleichen geometrischen Abmaße auf. Es ist jedoch denkbar Radialrippen unterschiedlicher geometrischer Form und/oder geometrischer Abmessung zu verwenden.

Ferner geht insbesondere aus Fig. 3 bis 5 hervor, dass die Rippen 23 in Radialrichtung nicht über die radiale Abmessung der Stülphülse 5 hervorstehen, was insbesondere durch die oben beschriebene sich verjüngende Wandstärke des Hülsengreifabschnitts 10 bewerkstelligt ist. Durch das offene Stülpende 9 des Hülsengreifabschnitts 10 kann sich der Hülsengreifabschnitt 10 in Radialrichtung elastisch weiten, wenn ein Kunststoffrohr 3 mit einem geringfügig größeren Durchmesser im Vergleich zum Hülsengreifabschnitt 10 in die Stülphülse 5 eingeführt wird. Beispielsweise können dadurch auch geringfügige Fertigungsungenauigkeiten ausgeglichen werden.

Der Hülsenfensterabschnitt 12 der Stülphülse 5 grenzt unmittelbar an den Hülsengreifabschnitt 10 an und ist im Wesentlichen hohlzylinderförmig sowie vorzugsweise rippenfrei ausgebildet. Insbesondere in Fig. 3 ist zu erkennen, dass der Hülsenfensterabschnitt 12 ein insbesondere rechtwinkliges Einsetzfenster 15 besitzt, in das der Dichtungskörper 17 eingesetzt werden kann. Weitere geometrische Formen des Einsetzfensters 15 sind denkbar, insbesondere kann das Eingriffsfenster 15 eine abgerundete Kontur aufweisen. Wie oben bereits beschrieben wurde, grenzt das Anschlagsende 11 unmittelbar an das Eingriffsfenster 15 an. Durch das Anschlagsende 11 ist der Hülsenfensterabschnitt 12 im Vergleich zu dem Hülsengreifabschnitt 10 weniger leicht verformbar.

Insbesondere bezugnehmend auf Fig. 3 bis 6 wird im Folgenden die Form und die Funktionalität des Dichtungskörpers 17 beschrieben. Dieser umfasst einen teilringzylindrischen Dichtungsabschnitt 25 und einen daran angrenzenden kegelstumpf- oder kegelförmigen Dichtungsabschnitt (Stirnabschnitt) 27, wobei der Dichtungskörper 17 bei einer bevorzugten Ausführung einstückig ausgebildet und vorzugsweise in einem Spritzgießverfahren hergestellt ist. Der Dichtungskörper 17 dient im Montageendzustand des Kunststoffrohrendabschnitts 3 und der Stülphülse 5 zur fluiddichten Abdichtung des Kunststoffrohrs 3, um insbesondere das in dem Kunststoffrohr 3 geführte Datenkabel zu schützen, welches die Stülphülse 5 über den im Anschlagsende 11 vorgesehenen Schlitz 13 verlässt. Der Dichtungskörper 17 wird beim Einsetzen in das Einsetzfenster 15 derart in Bezug auf die Stülphülse 5 ausgerichtet, dass eine an der Stirnfläche ausgebildete Anlagefläche 34 des ringzylindrischen Dichtungsabschnitts 25 zu dem Radialanschlag 11 weist und der kegelstumpfförmige Dichtungsabschnitt 27 in Richtung des einzusetzenden Kunststoffrohrs 3. Ferner ist die dem Radialanschlag 11 zugeordnete Stirnfläche 29 des Dichtungskörpers 17 im Wesentlichen formkomplementär zu der Anlagefläche 11a des Radialanschlags 11 ausgebildet.

Vorzugsweise besitzt der teilzylindrische Ring-Dichtungsabschnitt 25 an der zum Radialanschlag 11 weisenden Seite eine Dom- oder Kuppelform. Dadurch ist gewährleistet, dass ein insbesondere vollflächiger Dichtungskontakt zwischen Anschlagsende 11 und Dichtungskörper 17 entsteht. Der kegelstumpfförmige Dichtungsabschnitt 27, der zum dichtenden Abschließen des Innenkanals des Kunststoffrohrs 3 dient und dessen größter Durchmesser bei einer bevorzugten Ausführungsform kleiner ist als der Durchmesser des ringzylindrischen Dichtungsabschnitts 25, ermöglicht es, unterschiedliche Innenkanaldurchmesser abzudichten. Durch den in Axialrichtung abnehmenden Durchmesser des kegelstumpfförmigen Dichtungsabschnitts 27 ist stets ein vollumfänglicher Dichtungskontakt innerhalb des Kunststoffrohrs 3 bereitgestellt. Grundsätzlich wird der Dichtungskörper 17 bei der Montage der Einzelzugabdichtung 1 durch das Kunststoffrohr 3 gegen den Radialanschlag 11 gedrückt, um durch elastische Deformation axiale Dichtungskräfte aufzubauen. Ferner bewirkt die elastische Deformierbarkeit des Dichtungskörpers 17, dass bei der Montage des Kunststoffrohrs 3 in die Stülphülse 5 auftretende, auf den Dichtungskörper 17 wirkende Montagequetschkräfte dazu führen, dass der kegelstumpfförmige Dichtungsabschnitt 27 insbesondere vollständig in dem Kunststoffrohr 3 aufgenommen ist, was zu einer Erhöhung der Dichtungsfunktion führt. Die Außenabmessungen des Kunststoffrohres 3 und des Innenraums 7 sind dabei derart aufeinander abgestimmt, dass die axialen elastischen Deformationskräfte beziehungsweise Rückstellkräfte des Dichtungskörpers 17 durch den Formschluss zwischen der Stülphülse 5 und dem Endabschnitt 3 gehalten werden. Daher muss im montierten Zustand des Kunststoffrohrs 3 und der Stülphülse 5 zunächst eine zwischen diesen existierende Haftreibungskraft überwunden werden, um diese relativ zueinander zu bewegen. Insbesondere reichen die beim Verpressen des Dichtungskörpers 17 gegen das Anschlagsende 11 entstehenden axialen Rückstellkräfte nicht aus, um eine Relativbewegung zwischen Kunststoffrohr 3 und Stülphülse 5 zu bewirken.

Wie am besten in Fig. 4 und 6 zu sehen ist, weist der Dichtungskörper 17 in dessen Axialrichtung eine Durchgangsbohrung 31 auf, die dazu dient, wenigstens ein Datenkabel aufzunehmen, wobei insbesondere der Dichtungskörper 17 das Datenkabel im montierten Zustand vollständig umgibt. Bei einer bevorzugten Ausführungsform ist die Durchgangsbohrung 31 konzentrisch zu dem kegelstumpfförmigen Dichtungsabschnitt 27 angeordnet. Des Weiteren ist der Dichtungskörper 17 in Längsrichtung geschlitzt ausgebildet, wobei über diesen Schlitz 33 das Datenkabel in die Durchgangsbohrung (Dichtungskanal) 31 eingesetzt werden kann. Beim Einsetzen des Dichtungskörpers 17 durch das Einsetzfenster 15 in den Innenraum 7 der Stülphülse 5 ist darauf zu achten, dass sich der Längsschlitz 33 des Dichtungskörpers 17 in Umfangsrichtung distal des Einsetzfensters 15 befindet, wodurch ein Aufspreizen des Dichtungskörpers 17 beim axialen Verpressen desselben nicht erfolgt. Dadurch kann das Verletzungsrisiko eines aus der Stülphülse 5 radial vorstehenden Teils des Dichtungskörpers 17 reduziert, insbesondere vermieden, werden. Ferner werden eventuelle aus dem Aufspreizen des Dichtungskörpers 17 resultierende Undichtigkeiten bezüglich des Datenkabels vermieden.

Bei einer bevorzugten Ausführung, die am besten in Fig. 6 zu sehen ist, ist der ringzylindrische Dichtungsabschnitt 25 nicht konzentrisch zu dem kegelstumpfförmigen Dichtungsabschnitt 27 angeordnet. Insbesondere ist der kegelstumpfförmige Dichtungsabschnitt 27 in Radialrichtung bezüglich einer Symmetrielinie des ringzylindrischen Dichtungsabschnitts 25 versetzt ist, vorzugsweise in Richtung des Längsschlitzes 33 in Radialrichtung versetzt. Dadurch steht der Dichtungskörper 17, insbesondere der ringzylindrische Dichtungsabschnitt 25, um einen Abstand a über die Außenmantelfläche der Stülphülse 5, insbesondere des Hülsenfensterabschnitts 12, über. Somit ist die Demontage beziehungsweise das Herausnehmen des Dichtungskörpers 17 aus der Stülphülse 5 erleichtert, da der Dichtungskörper 17 für eine Bedienperson, wie ein Wartungspersonal, besser erreichbar ist. Dieser Abstand a ist insbesondere in Fig. 4 bis 6 erkennbar.

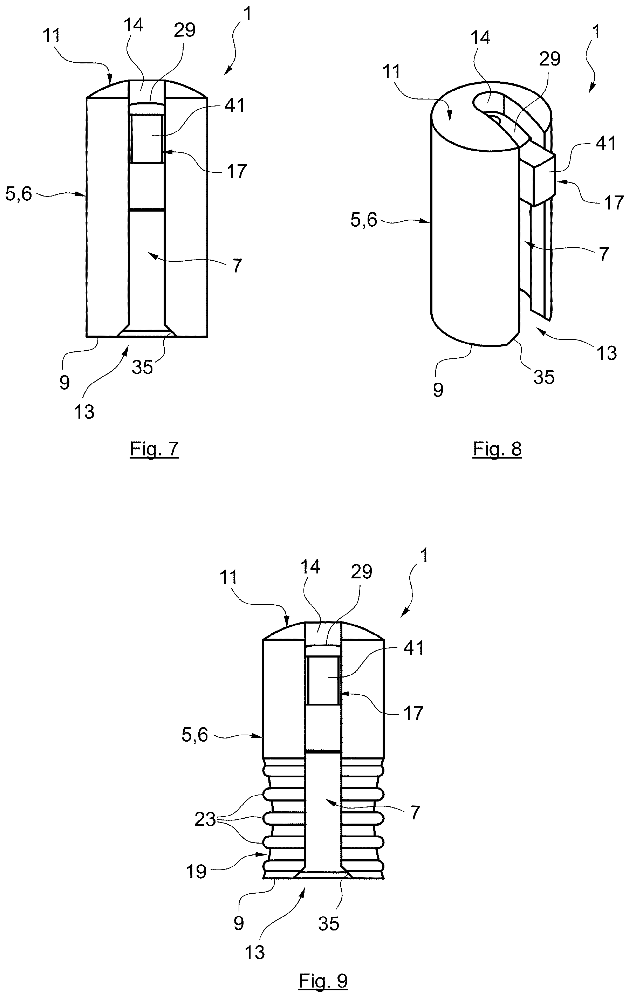

In Bezug auf die Figuren 7 bis 17 werden weitere beispielhafte Ausführungen erfindungsgemäßer Einzelrohrabdichtungen 1 erläutert. Gleiche bzw. ähnlichen Komponenten werden gleichen bzw, ähnlichen Bezugsziffern versehen. Zur Vermeidung von Wiederholungen werden im Wesentlichen die in Bezug auf die einzelnen Ausführungen bestehenden Unterschiede hervorgehoben.

Der wesentliche Unterschied der Einzelrohrabdichtung 1 der Fig. 7 und 8 gegenüber der Ausführung der Figuren 1 bis 5 besteht darin, dass auf ein gegenüber dem Längsschlitz 13 breiteres Einsetzfenster 15 verzichtet wird. Es ist zu erkennen, dass der Längsschlitz 13 in seiner vollständigen Längserstreckung im Wesentlichen dieselbe Breite b besitzt. Somit unterscheidet sich die Ausführung der Figuren 7 und 8 auch in Hinblick auf die Funktionsweise und insbesondere die Montage des Dichtungskörpers 17: Der Dichtungskörper 17 kann, im Gegensatz zur Ausführung der Figuren 1 bis 5, nicht mehr radial in die Stülphülse 5 eingesetzt werden, sondern wird in Axialrichtung, d.h. Längserstreckungsrichtung der Stülphülse 5, über das Stülpende 9 axial in den Innenraum 7 eingesetzt, bis dieser in einen Anschlagkontakt mit dem Radialanschlag 11 gerät. Damit geht auch eine unterschiedliche Auslegung und Dimensionierung des Dichtungskörpers 17 einher. Der in den Figuren 1 bis 5 teilringzylindrische Dichtungsabschnitt 25 umfasst einen in seiner Breite deutlich reduzierten Dichtungsvorsprung 41, welcher aus dem Längsschlitz 13 radial vorsteht, insbesondere deutlich weiter hervorsteht, als diese in den Figuren 1 bis 5 der Fall ist. Über den Dichtungsvorsprung 41 kann der Dichtungskörper 17 einfacher montiert bzw. demontiert werden. Die Breite des Dichtungsvorsprungs 41 ist im Wesentlichen an die konstante Längsschlitzbreite b angepasst.

Zur erleichterten Montage des Dichtungskörpers 17 in die Stülphülse 5 ist der Hülsenmantel 6 im Bereich des Stülpendes 9 zur Bildung einer erweiterten Eingangsöffnung 35 in den Längsschlitz 13 angefast.

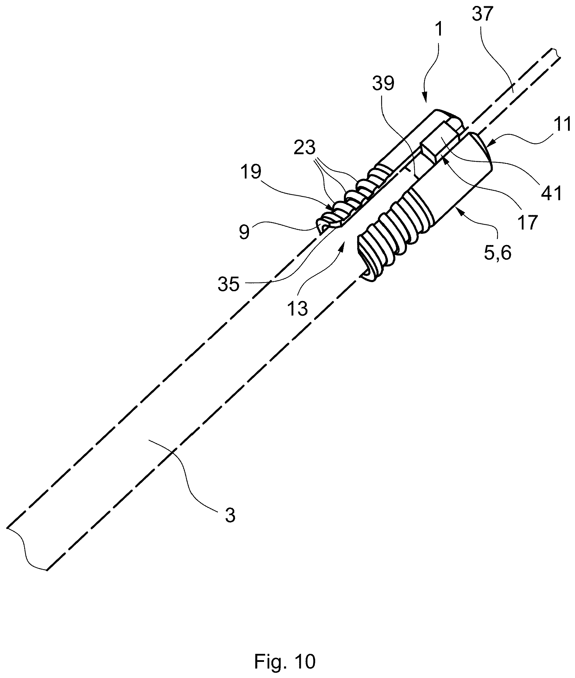

In den Figuren 9 und 10 ist eine weitere beispielhafte Ausführung einer erfindungsgemäßen Einzelrohrabdichtung 1 gezeigt, die grundsätzlich analog zu der Ausführung gemäß der Figuren 7 und 8 ausgebildet ist, allerdings ist die Makelaußenfläche 19 entsprechend der Ausführung der Figuren 1 bis 5 realisiert. In Figur 10 ist die Einzelrohrabdichtung 1 gemäß Figur 9 an ein Kunststoffrohr 3 montiert, in das ein Datenkabel 37 verlegt ist und welches die Einzelrohrabdichtung 1 über die Austrittsöffnung 14 verlässt. Durch eine strichlierte Linie ist ferner ein Einzelrohrabdichtungsseitiges Stirnende 39 des Kunststoffrohrs 3 angedeutet, welches etwas über 50 % der Längserstreckung der Einzelrohrabdichtung 1 in dieses eingeschoben ist.

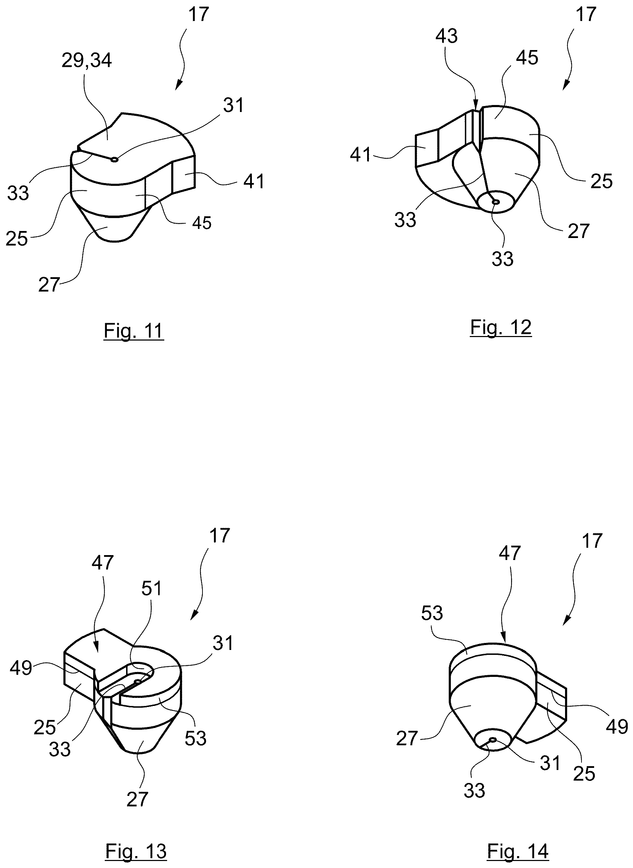

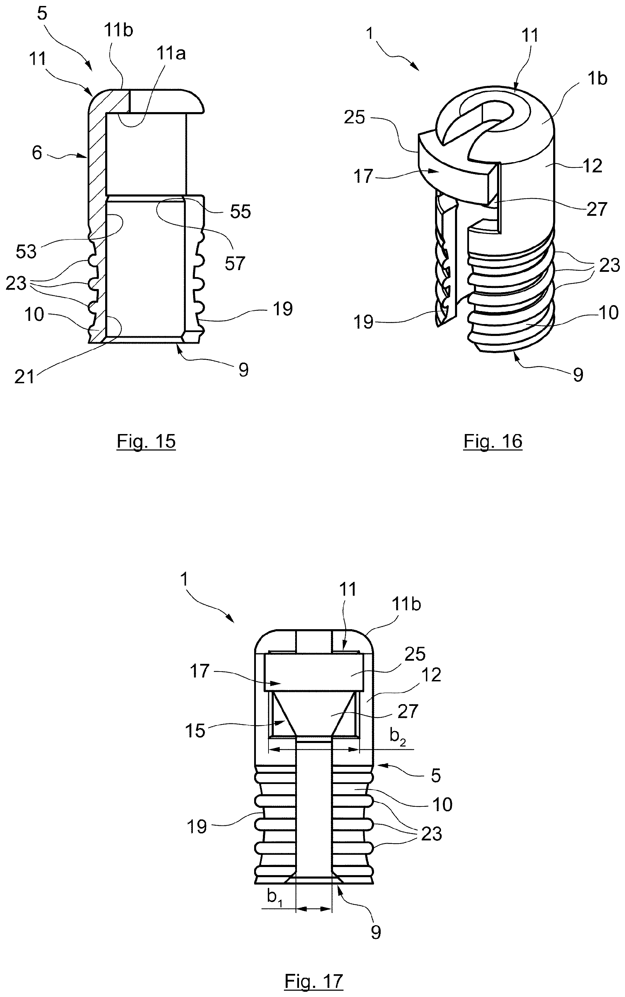

Die Figuren 11 bis 14 zeigen beispielhafte Ausführungen von Dichtungskörpern 17 für erfindungsgemäße Einzelrohrabdichtungen 1. Dabei können die Dichtungskörper 17 der Figuren 11 und 12 insbesondere für die Ausführung der erfindungsgemäßen Einzelrohrabdichtung 1 der Figuren 1 bis 5 geeignet sein und die Dichtungskörper 17 der Figuren 13 und 14 insbesondere für die erfindungsgemäße Einzelrohrabdichtung 1 gemäß der Figuren 7 bis 9. Dabei ist allerdings klar, dass die Dichtungskörper 17 der Figuren 11 bis 14 noch grundsätzlich so dimensioniert sein können, dass sie jeweils für die andere Ausführung der erfindungsgemäße Einzelrohrabdichtungen 1 geeignet sind. Der Dichtungskörper 17 gemäß der Figuren 11 und 12 ist grundsätzlich ähnlich zu dem Dichtungskörper 17 der Figuren 1 bis 6 ausgebildet. Ein wesentlicher Unterschied besteht allerdings im Hinblick auf die Stirnfläche 29, welche die Anschlagfläche 34 aufweist, die mit dem Radialanschlag 11 der Stülphülse 6 in einen Dicht- und Anschlagkontakt bringbar ist. Im Unterschied zu der konkaven Form der Stirnfläche 29 in der Ausführung gemäß der Figuren 1 bis 6 ist die Stirnfläche 29 und damit auch die Anlagefläche 34 des Dichtungskörpers 17 in den Figuren 11 und 12 eben geformt. Eine Fläche normale auf die Stirnfläche 29 ist im montierten Zustand der Stülphülse parallel zu dessen Längserstreckungsrichtung orientiert. Der Dichtungskörper 17 ist damit insbesondere auch für die erfindungsgemäße Ausführung der Einzelrohrabdichtung 1 der Figuren 15 bis 17 geeignet, in denen die Innenanschlagsfläche 11a ebenso eben gestaltet ist, im Unterschied zu der Ausführung gemäß de Figuren 1 bis 6 bei der die Innenanschlagsfläche 11a konvex geformt ist. Der Dichtungsvorsprung 41, der in Umfangsrichtung des Dichtungskörpers 17 in etwa um ein Vierteil umläuft und im Bereich des Ringzylindrischen Dichtungsabschnitts 25 angeordnet ist, ist im Vergleich zu dem Dichtungskörper 17 der Figuren 7 bis 10 deutlich breiter ausgestaltet. Daher eignet sich der Dichtungskörper 17 der Figuren 11 und 12 vor allem für die Einzelrohrabdichtungen 1 mit Einsetzfenster 15. Ferner ist in den Figuren 11 und 12 auch zu erkennen, dass der Dichtungslängsschlitz 33 nicht mit dem Dichtungsvorsprung 41 zusammenfällt. Insbesondere ist der Dichtungslängsschlitz 33 um 90 Grad bezüglich des Dichtungsvorsprungs 41 versetzt angeordnet. Somit kann gewährleistet werden, dass bei montiertem Dichtungskörper 17 in der Stülphülse 6 der Dichtungslängsschlitz 33 nicht mit dem Längsschlitz 13 der Stülphülse 6 bzw. dem Einsetzfenster 15 zusammenfällt.

Insbesondere in Figur 12 zu erkennen, dass am Außenumfang 45 des ringzylindrischen Dichtungsabschnitt 25 der Dichtungslängsschlitz 33 eine V-förmige Querschnittsform besitzt, was durch das Bezugszeichen 43 angedeutet ist. Über den somit erweiterten Längsschnitteingang 43 kann eine Montage eines Datenkabels 37 erleichtert sein. Die V- Form des Dichtungslängsschlitzeingangs 43 bewirkt eine Art Zentrierung bzw. Führung des Datenkabels 37 in Richtung Zentrum des Dichtungslängsschlitzes 33.

In den Figuren 13 und 14 ist eine weitere beispielhafte Ausführung eines Dichtungskörpers 17 für erfindungsgemäße Einzelrohrabdichtungen 1 abgebildet. Der Dichtungskörper 17 eignet sich insbesondere für diejenigen Einzelrohrabdichtungen, bei denen die Innenanschlagsfläche 11a des Radialanschlags eben geformt ist. Der Dichtungskörper 17 der Figuren 13 und 14 ist im Unterschied zu den Dichtungskörpern 17 der vorhergehenden Ausführungen dadurch gekennzeichnet, dass der Dichtungskörper 17 mit einem radialanschlagsseitigen Versteifungsabschnitt 47 versehen ist. Der Dichtungskörper 17 inklusive des Versteifungsabschnitts 47, der als ebenes Plättchen, beispielsweise aus Kunststoff, ausgebildet sein kann und an eine radialanschlagsseitige Stirnfläche 49 des Dichtungskörpers 17, insbesondere des ringzylindrischen Dichtungsabschnitts 25, in seiner Form angepasst sein kann, können in einem Zweikomponentenspritzgießverfahren hergestellt sein. Wesentlich ist, dass der Versteifungsabschnitt eine höhere Festigkeit, Stabilität und insbesondere weniger Nachgiebigkeit gegen ein axiales Verpressen als der restliche Grundkörper des Dichtungskörpers 17 besitzt. Somit wird die Gesamtsteifigkeit des Dichtungskörpers 17 erhöht. Dadurch kann gewährleistet werden, dass höhere Presskräfte toleriert werden, sodass der Dichtungskörper 17 nicht radial seitlich aus dem Innenraum der Dichtungskörper 17 erhöht. Dadurch kann gewährleistet werden, dass höhere Presskräfte toleriert werden, sodass der Dichtungskörper 17 nicht radial seitlich aus dem Innenraum 7 der Stülphülse 5 herausgequetscht wird, insbesondere für den Fall, dass die Stülphülse 5 ein Einsetzfenster 15 besitzt.

In der perspektivischen Unteransicht gemäß Figur 14 ist zu erkennen, dass sich der Dichtungslängsschlitz 33 und der Dichtungskanal 31 durch die vollständige Längserstreckung des Dichtungskörpers 17 hindurch erstrecken, wobei, wie es in Figur 13 zu sehen ist, der Versteifungsabschnitt 47 statt des Dichtungslängsschlitzes 33 und des Dichtungskanals 31 eine nutartige Aussparung 50 von einer Außenumfangsfläche 53 des plättchenartigen Versteifungsabschnitts 47 besitzt, der bezüglich seiner Position an die Positionierung des Dichtungslängsschlitzes 33 und das Dichtungskanals 31 angepasst ist.

In den Figuren 15 bis 17 ist eine weitere beispielhafte Ausführung einer erfindungsgemäßen Einzelrohrabdichtung 1 abgebildet, wobei Figur 15 isoliert die Stülphülse 5 in Schnittansicht von der Seite zeigt. Die Einzelrohrabdichtung 1 der Figuren 15 bis 17 ist im Wesentlichen ähnlich zu der Einzelrohrabdichtung 1 der Figuren 1 bis 6 aufgebaut. Ein wesentlicher Unterschied besteht im Hinblick auf den Radialanschlag 11, der gemäß der Figuren 1 bis 6 domartig gewölbt ist und eine konvex geformte Innenanschlagsfläche 11a und Außenanschlagsfläche 11b besitzt, während die Stülphülse 5 der Figuren 15 bis 17 einen im Wesentlichen ebenen Radialanschlag 11 besitzt, dessen Innenanschlagsfläche 11a und Außenanschlagsfläche 11b geradlinig und eben geformt sind.

Entsprechend der Ausführung der Figuren 1 bis 6 weist der Hülsenmantel 6 an seiner zumindest teilzylindrischen Innenumfangsfläche 53 eine Montagehilfe 55 auf. Die Montagehilfe 55 ist dazu eingerichtet, einer Bedienperson oder Montageperson bei der Montage des Kunststoff-Mikrorohrs 3 in den Innenraum 7 einen zusätzlichen Montagewiderstand mitzuteilen, welcher dazu dienen soll, dass auch ungeübtes Bedienpersonal einen zuverlässigen Dichtkontakt zwischen dem Dichtungskörper 17 und dem Innenendrand des Kunststoffrohres 3 einstellt. Die Montagehilfe 55 ist, wie es unter Vergleich der Figuren 4 und 15 zu sehen ist, beispielhaft als teilweise umlaufender, in Richtung Innenraum 7 vorstehender Vorsprung ausgebildet, der im Wesentlichen dreieckförmig gebildet ist. Dies bedeutet, dass die Montagehilfe 15 spitz in Richtung Innenraum 7 zuläuft und eine in einem spitzen Winkel bezüglich der Innenumfangsfläche 53 geneigte Einkrallflanke 57 besitzt, über die das Kunststoffrohr 3 kontinuierlich beim aufeinander Aufschieben von Stülphülse 5 und Kunststoffrohr 3 überfahren muss bzw. darüber gleitet, währenddessen sich der Montagewiderstand kontinuierlich erhöht. Die Montagehilfe 55 hat den weiteren Effekt, dass insbesondere durch die geometrische Realisierung mit der spitz zulaufenden Einkrallflanke 57 sich der Einkrallvorsprung 55 in das Kunststoffrohr 3 einkrallen bzw. einschneiden kann. Bei einer Relativbewegung zwischen Stülphülse 5 und Kunststoffrohr 3 entgegengesetzt der Montagerichtung, also in Demontagerichtung, ist der Einkrallvorsprung 55 dazu in der Lage, einen gegenüber dem zusätzlichen Montagewiderstand deutlich erhöhten zusätzlichen Demontagewiderstand aufzubauen, um ein ungewolltes Demontieren zu vermeiden. Der spitz zulaufende Einkrallvorsprung 55 schneidet bzw. krallt sich in den Außenumfang des Kunststoffrohrs 3 wenigstens minimal ein, wobei wenige zehntel Millimeter bereits ausreichen, wodurch eine Demontage nur unter deutlich erhöhtem Kraftaufwand möglich ist.

In den Figuren 16 und 17 ist die Stülphülse 5 der Figur 15 mit einem Dichtungskörper 17 zur Bildung einer erfindungsgemäßen Einzelrohrabdichtung 1 gelegt, wobei der Dichtungskörper 17 in den Figuren 16 und 17 beispielhaft entsprechend des Dichtungskörpers 17 der Figuren 11 und 12 ausgebildet ist. Zur Vermeidung von Wiederholungen kann auf die vorhergehenden Ausführungen verwiesen werden.

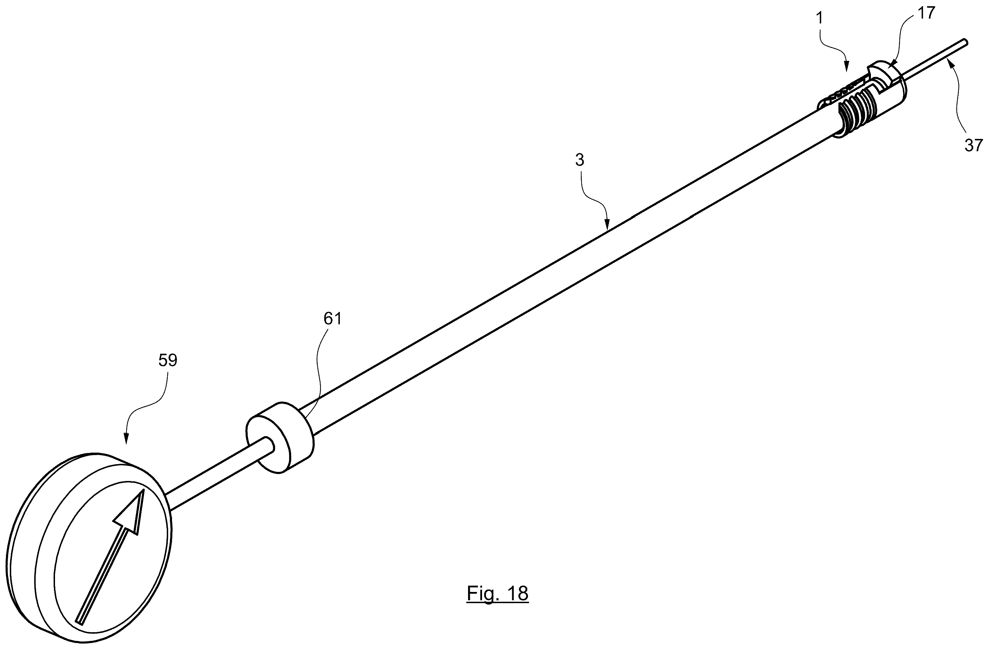

In Figur 18 ist eine schematische Prinzipskizze zur Dichtigkeits- bzw. Druckprüfung erfindungsgemäßer Einzelrohrabdichtungen 1 abgebildet. Dabei ist der Einzelrohrabdichtung 1 an ein Kunststoffrohr 3 montiert, in dem ein Datenkabel 37 verlegt ist, welches die Einzelrohrabdichtung 1 stirnseitig über die Austrittsöffnung ₁₄ verlässt. An einem gegenüberliegenden Ende 61 des Kunststoffrohrs 3 ist eine Druckluftquelle ₅1 angeschlossen, mittels der ein Innendruck in dem Kunststoffrohr 3 von bis zu 1 bar aufgebracht werden kann, um die Dichtigkeit zwischen Dichtungskörper 17 und Kunststoffrohr 3 und/oder zwischen Dichtungskörper 17 und Datenkabel 37 zu prüfen. Beispielsweise ist die gesamte Vorrichtung unter Wasser gehalten, um einen Druckverlust bzw. eine Undichtigkeit schneller identifizieren zu können.

Die Montage einer erfindungsgemäßen Einzelrohrabdichtung 1 kann beispielsweise wie folgt ablaufen: Beispielsweise ist ein Kunststoffrohr 3 bereitgestellt, in dem ein Datenkabel 37 verlegt ist. Zunächst wird der Dichtungskörper 17 über dessen Dichtungslängsschlitz 33 auf das Datenkabel radial aufgeschoben bzw. aufgesteckt, bis das Datenkabel 37 mittig, nämlich im Bereich des Dichtungskanals 31, innerhalb des Dichtungskörpers 17 aufgenommen ist. Anschließend wird die Stülphülse 5 auf den Dichtungskörper 17 montiert. Dabei wird die Stülphülse je nach Ausführung, d.h. je nachdem, ob ein Einsetzfenster 15 vorliegt oder nicht, entweder mittels des Einsetzfensters 15 radial auf den Dichtungskörper 17 aufgeschoben oder in Axialrichtung, d.h. Längserstreckungsrichtung der Stülphülse 5, axial auf den Dichtungskörper 17 aufgeschoben. Bei beiden Montagearten ist darauf zu achten, dass der Dichtungslängsschlitz 33 nicht mit dem Längsschlitz 13 bzw. dem Einsetzfenster 15 zusammenfällt. Ferner wird die Stülphülse 5 derart auf den Dichtungskörper 17 aufgesteckt, dass die Stülphülse 5 noch nicht im Kontakt bzw. im Eingriff mit dem Kunststoffrohr 3 gelangt. Im letzten Schritt erfolgt die Axialverpressung zum Dichtigkeitsaufbau des Dichtungskörpers 17 zwischen Stülphülse 5, insbesondere Radialanschlag 11 und Kunststoffrohrende, in welches der kegelstumpfförmige Dichtungsabschnitt 27 zunehmend axial eingepresst wird. Wie bereits zuvor erläutert, kann eine Montagehilfe 55 vorgesehen sein, welche durch den insbesondere kontinuierlichen Aufbau eines zusätzlichen Montagewiderstands selbst bei ungeübtem Bedienpersonal eine zuverlässige Abdichtung zwischen Dichtungskörper 17 und Datenkabel 37 bzw. zwischen Dichtungskörper 17 und Kunststoffrohr 3 gewährleistet.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Einzelzugabdichtung
- 3: Kunststoffrohr
- 4: Endabschnitt
- 5: Stülphülse
- 6: Hülsenmantel
- 7: Innenraum
- 9: Stülpende
- 10: Hülsengreifabschnitt
- 11: Radialanschlag
- 11a: Innenanschlagsfläche
- 11b: Außenanschlagsfläche
- 12: Hülsenfensterabschnitt
- 13: Längsschlitz
- 14: Austrittsöffnung
- 15: Einsetzfenster
- 17: Dichtungskörper
- 19: Mantelaußenfläche
- 21: Mantelinnenfläche
- 23: Rippe
- 25: Ringzylindrischer Dichtungsabschnitt
- 27: Kegelstumpfförmiger Dichtungsabschnitt
- 29: Stirnfläche
- 31: Durchgangsbohrung
- 33: Längsschlitz des Dichtungskörpers
- 34: Anlagefläche
- 35: Eingangsöffnung
- 37: Datenkabel
- 39: Kunststoffrohrende
- 41: Dichtungsvorsprung
- 43: Dichtungslängsschlitzeingang
- 45: Außenumfang des ringzylindrischen Dichtungsabschnitts
- 47: Versteifungsabschnitt
- 49: radialanschlagsseitige Stirnfläche
- 51: Aussparung
- 53: Innenumfangsfläche
- 55: Montagehilfe
- 57: Einkrallflanke
- 59: Druckluftquelle
- 61: Ende
- b: Breite des Längsschlitzes
- b1: Breite des Längsschlitzes im Hülsengreifabschnitt
- b2: Breite des Längsschlitzes im Hülsenfensterabschnitt
- b3: Breite des Längsschlitzes im Anschlagsende
- a: Abstand

## Patentansprüche

1. Einzelrohrabdichtung (1) zum Montieren an einem Endabschnitt (4) eines starren Kunststoffrohrs (3), wie eines Mikrorohrs, das einen Innenkanal zum Aufnehmen von wenigstens einem Datenkabel, wie einem Glasfaserkabel, umfassend:
eine zumindest teilzylindrische Stülphülse (5), die aus einem starren Material, wie Kunststoff, gebildet ist und einen Innenraum (7), in den der Endabschnitt (4) einsteckbar ist, einen den Innenraum (7) zumindest teilweise umgebenden Hülsenmantel (6), eine Einstecköffnung (9) zum axialen Einführen des Endabschnitts (4) in den Innenraum (7) und einen der Einstecköffnung (9) diametral gegenüberliegenden Radialanschlag (11), der ein axiales Verschieben des in dem Innenraum (7) eingesteckten Endabschnitts (4) des Kunststoffrohres (3) begrenzt und eine Austrittsöffnung (14) aufweist, durch die hindurch sich das Datenkabel aus dem Innenraum (7) axial erstrecken kann, wobei der Hülsenmantel (6) und der Radialanschlag (11) mit einem Längsschlitz (13) ausgebildet sind, längs dem das Datenkabel durch radiales Einsetzen in die Stülphülse (5) derart verlegbar ist, dass es an der Einstecköffnung, im Verlauf der gesamten Längserstreckung der Stülphülse (5) und an der Austrittöffnung (14) koaxial zur Längsachse der Stülphülse (5) liegen kann,
einen in den Innenraum (7) eingesetzten, elastisch verformbaren Dichtungskörper (17), der einen dem Innenkanal des Kunststoffrohrs (3) zugewandten Stirnabschnitt (27) aufweist, der zum Abdichten des Innenkanals geformt ist, wobei zum Aufbau der Abdichtung der Dichtungskörper zwischen dem Radialanschlag (11) und dem Endabschnitt axial verpresst ist,
wobei die radiale Außenabmessung des Endabschnitts (4) und die radiale Innenabmessung des Hülsenmantels (6) zum Aufbau einer axialen Klemmkraft derart aufeinander abgestimmt sind, dass eine durch die axiale Verpressung erzeugte elastische Rückstellkraft des Dichtungskörpers (17) von der Klemmkraft gehalten wird.

2. Einzelrohrabdichtung (1) nach Anspruch 1, bei der ein radiales Flächenübermaß zwischen dem zylindrischen Endabschnitt (4) und der zylindrischen Innenseite des Hülsenmantels (6) eine kontinuierliche Axialerstreckung von wenigstens 3 mm, 5 mm, 7 mm oder 10 mm aufweist, wobei insbesondere sich die zylindrische Flächenklemmung über zumindest 50 %, 60 %, 70 %, 80 % oder 100 % einer Gesamtstülplänge zwischen dem Endabschnitt (4) und dem Hülsenmantel erstreckt.

3. Einzelrohrabdichtung (1) nach Anspruch 1 oder 2, bei der die axiale Klemmkraft zum Halten der elastischen Rückstellkraft des Dichtungskörpers (17) ausschließlich durch die Flächenklemmung aufgrund des radialen Flächenübermaßes gebildet ist, wobei insbesondere beim Montieren des Endabschnitts (4) in die Stülphülse (5) bis zum Erreichen der Montageendposition des Endabschnitts (4) keinen zusätzlichen Rastwiderstand überwunden werden muss.

4. Einzelrohrabdichtung (1) nach einem der vorstehenden Ansprüche, bei der eine zylindrische Innenseite des Hülsenmantels (6) kontinuierlich verläuft und ohne einen radial von der zylindrischen Fläche nach innen vorstehenden Radialabsatz zwischen der Einstecköffnung (9) und dem Radialanschlag (11) geformt ist, wobei insbesondere die zylindrische Innenseite vorzugsweise ausschließlich durch den Längsschlitz (13) in Radialrichtung unterbrochen ist.

5. Einzelrohrabdichtung (1) insbesondere nach einem der vorstehenden Ansprüche oder zum Montieren an einem Endabschnitt (4) eines starren Kunststoffrohrs (3), wie eines Mikrorohrs, das einen Innenkanal zum Aufnehmen von wenigstens einem Datenkabel, wie Glasfaserkabel, umfassend:
eine zumindest teilzylindrische Stülphülse (5), die aus einem starren Material, wie Kunststoff, gebildet ist und einen Innenraum (7), in den der Endabschnitt (4) einsetzbar ist, einen den Innenraum (7) zumindest teilweise umgebenden Hülsenmantel (6), eine Einstecköffnung (9) zum axialen Einführen des Endabschnitts (4) in den Innenraum (7) und einen der Einstecköffnung (9) diametral gegenüberliegenden Radialanschlag (11), der ein axiales Verschieben des in dem Innenraum eingesteckten Endabschnitts (4) des Kunststoffrohres (3) begrenzt und eine Austrittsöffnung (14) aufweist, durch die hindurch sich das Datenkabel aus dem Innenraum (7) axial erstrecken kann, wobei der Hülsenmantel (6) und der Radialanschlag (11) mit einem Längsschlitz (13) ausgebildet sind, längs dem das Datenkabel durch radiales Einsetzen in die Stülphülse (5) derart verlegbar ist, dass es an der Einstecköffnung (9), im Verlauf der gesamten Längserstreckung der Stülphülse (5) und an der Austrittöffnung (14) koaxial zur Längsachse der Stülphülse (5) liegen kann,
einen in den Innenraum (7) eingesetzten, elastisch verformbaren Dichtungskörper (17), der einen dem Innenkanal des Kunststoffrohrs (3) zugewandten Stirnabschnitt (27) aufweist, der zum Abdichten des Innenkanals geformt ist, wobei zum Aufbau der Abdichtung der Dichtungskörper (17) zwischen dem Radialanschlag (11) und dem Endabschnitt (4) axial verpresst ist,
wobei der Radialanschlag (11) eine dem Dichtungskörpers (17) zugewandte, radiale Anlagefläche (11a) aufweist, die konkav geformt ist, insbesondere eine rotationförmige Trichterform aufweist.

6. Einzelrohrabdichtung (1) nach einem der vorstehenden Ansprüche, bei der der dem Innenkanal des Kunststoffrohres (3) zugewandte Stirnabschnitt (27) kegelförmig, insbesondere kegelstumpfförmig insbesondere mit einer ersten Außenneigung ausgebildet ist und/oder die Anlagefläche des Dichtungskörpers (17) eine radialplane Form oder mit einer konvexen Form, insbesondere einer rotationsförmigen Trichterform, formkomplementär zur Anlagefläche (11a) gestaltet ist, wobei insbesondere eine zweite Außenneigung der Trichterform der Anlagefläche (11a) unterschiedlich zur ersten Außenneigung ist.

7. Einzelrohrabdichtung (1) insbesondere nach einem der vorstehenden Ansprüche oder zum Montieren an einem Endabschnitt (4) eines starren Kunststoffrohrs (3), wie eines Mikrorohrs, das einen Innenkanal zum Aufnehmen von wenigstens einem Datenkabel, wie Glasfaserkabel, umfassend:
eine zumindest teilzylindrische Stülphülse (5), die aus einem starren Material, wie Kunststoff, gebildet ist und einen Innenraum (7), in den der Endabschnitt (4) einsteckbar ist, einen den Innenraum (7) zumindest teilweise umgebenden Hülsenmantel (6), eine Einstecköffnung (9) zum axialen Einführen des Endabschnitts in den Innenraum (7) und einen der Einstecköffnung (9) diametral gegenüberliegenden Radialanschlag (11), der ein axiales Verschieben des in dem Innenraum (7) eingesteckten Endabschnitts (4) des Kunststoffrohres (3) begrenzt und eine Austrittsöffnung (14) aufweist, durch die hindurch sich das Datenkabel aus dem Innenraum (7) axial erstrecken kann, wobei der Hülsenmantel (6) und der Radialanschlag (11) mit einem Längsschlitz (13) ausgebildet sind, längs dem das Datenkabel durch radiales Einsetzen in die Stülphülse (5) derart verlegbar ist, dass es an der Einstecköffnung (9), im Verlauf der gesamten Längserstreckung der Stülphülse (5) und an der Austrittöffnung (14) koaxial zur Längsachse der Stülphülse (5) liegen kann,
einen in den Innenraum (7) eingesetzten, elastisch verformbaren Dichtungskörper (17), der einen dem Innenkanal des Kunststoffrohrs (3) zugewandten Stirnabschnitt (27) aufweist, der zum Abdichten des Innenkanals geformt ist, wobei der Dichtungskörpers (17) einen mittigen, in Axialrichtung verlaufenden Dichtungskanal (31) aufweist, der dazu dient, das Datenkabel vollumfänglich zu umgreifen, wobei der Dichtungskörper (17) einen sich durch den Dichtungskörpers (17) hindurch hin zum Dichtungskanal (31) erstreckenden Dichtungslängsschlitz (33) umfasst, über den das Datenkabel radial in den Dichtungskanal (31) einsetzbar ist, wobei der Dichtungslängsschlitz (33) derart gegenüber dem Längsschlitz (13) des Hülsenmantels (6) angeordnet ist, dass er in Umfangsrichtung nicht mit dem Längsschlitz (13) zusammenfällt.

8. Einzelrohrabdichtung (1) nach Anspruch 7, bei der der Dichtungskörpers (17) einen teilzylindrischen Grundkörper (25) umfasst, dessen Außenabmessung zum Teil der zylindrischen Innenabmessung des Hülsenmantels (6) entspricht, wobei ein Dichtungslängsschlitzabschnitt des Grundkörpers (25) vollständig von einem Abschnitt des Hülsenmantels bedeckt ist, wobei insbesondere am teilzylindrischen Abschnitt des Grundkörpers der Dichtungslängsschlitz eingebracht ist und/oder von dem zylindrischen Abschnitt des Grundkörpers eine Radialerweiterung anschließt, welche in einen im Wesentlichen weiteren teilzylindrischen Erweiterungsabschnitt übergeht, dessen Radialabstand im Wesentlichen dem Radialabstand der Außenseite des Hülsenmantels (6) entspricht, wobei insbesondere der Erweiterungsabschnitt geringfügig radial über der zylindrischen Außenseite des Hülsenmantels vorsteht und vorzugsweise teilzylindrisch geformt ist, und/oder insbesondere an der Außenseite des Grundkörpers (24) kein diskontinuierlicher Radialvorsprung vorgesehen ist.

9. Einzelrohrabdichtung (1) nach einem der vorstehenden Ansprüche, bei der die Stülphülse (5) insbesondere an deren zylindrischen Außenseite wenigstens eine Nut und/oder eine Rippe (23), insbesondere eine Mehrzahl an umlaufenden Nuten und/oder Rippen (23), aufweist, wobei insbesondere mehrere Nuten und/oder Rippen (23) in Umfangsrichtung parallel zu einander vorzugsweise in einem gleichen Axialabstand umlaufen.

10. Einzelrohrabdichtung (1) insbesondere nach einem der vorstehenden Ansprüche oder zum Montieren an einem Endabschnitt (4) eines starren Kunststoffrohrs (3), wie eines Mikrorohrs, das einen Innenkanal zum Aufnehmen von wenigstens einem Datenkabel, wie Glasfaserkabel, umfassend:
eine zumindest teilzylindrische Stülphülse (5), die aus einem starren Material, wie Kunststoff, gebildet ist und einen Innenraum (7), in den der Endabschnitt (4) einsetzbar ist, einen den Innenraum (7) zumindest teilweise umgebenden Hülsenmantel (6), eine Einstecköffnung (9) zum axialen Einführen des Endabschnitts (4) in den Innenraum (7) und einen der Einstecköffnung (9) diametral gegenüberliegenden Radialanschlag (11), der ein axiales Verschieben des in dem Innenraum eingesteckten Endabschnitts (4) des Kunststoffrohres (3) begrenzt und eine Austrittsöffnung (14) aufweist, durch die hindurch sich das Datenkabel aus dem Innenraum (7) axial erstrecken kann, wobei der Hülsenmantel (6) und der Radialanschlag (11) mit einem Längsschlitz (13) ausgebildet sind, längs dem das Datenkabel durch radiales Einsetzen in die Stülphülse (5) derart verlegbar ist, dass es an der Einstecköffnung (9), im Verlauf der gesamten Längserstreckung der Stülphülse (5) und an der Austrittöffnung (14) koaxial zur Längsachse der Stülphülse (5) liegen kann, und
einen in den Innenraum (7) eingesetzten, elastisch verformbaren Dichtungskörper (17), der einen dem Innenkanal des Kunststoffrohrs (3) zugewandten Stirnabschnitt (27) aufweist, der zum Abdichten des Innenkanals geformt ist,
wobei der Hülsenmantel (6) an seiner zumindest teilzylindrischen Innenumfangsfläche eine Montagehilfe aufweist, die dazu eingerichtet ist, einer Bedienperson bei der Montage des Kunststoffrohrs (3) in den Innenraum (7) einen zusätzlichen Montagewiderstand mitzuteilen.

11. Einzelrohrabdichtung (1) nach Anspruch 10, wobei die Montagehilfe ein wenigstens teilweise umlaufender, in Richtung Innenraum (7) vorstehender Vorsprung ist.

12. Einzelrohrabdichtung (1) nach Anspruch 11, wobei der Vorsprung dazu eingerichtet ist, sich bei der Montage des Kunststoffrohrs (3) in die Stülphülse in das Kunststoffrohrs (3)einzukrallen, wobei insbesondere der Einkrallvorsprung spitz zulaufend geformt ist und/oder eine im Wesentlichen dreickförmig gebildet ist und/oder eine in einem spitzen Winkel bezüglich der Innenumfangsfläche der Stülphülse orientierte Einkrallflanke aufweist.

13. Einzelrohrabdichtung (1) insbesondere nach einem der vorstehenden Ansprüche oder zum Montieren an einem Endabschnitt (4) eines starren Kunststoffrohrs (3), wie eines Mikrorohrs, das einen Innenkanal zum Aufnehmen von wenigstens einem Datenkabel, wie Glasfaserkabel, umfassend:
eine zumindest teilzylindrische Stülphülse (5), die aus einem starren Material, wie Kunststoff, gebildet ist und einen Innenraum (7), in den der Endabschnitt (4) einsetzbar ist, einen den Innenraum (7) zumindest teilweise umgebenden Hülsenmantel (6), eine Einstecköffnung (9) zum axialen Einführen des Endabschnitts (4) in den Innenraum (7) und einen der Einstecköffnung (9) diametral gegenüberliegenden Radialanschlag (11), der ein axiales Verschieben des in dem Innenraum eingesteckten Endabschnitts (4) des Kunststoffrohres (3) begrenzt und eine Austrittsöffnung (14) aufweist, durch die hindurch sich das Datenkabel aus dem Innenraum (7) axial erstrecken kann, wobei der Hülsenmantel (6) und der Radialanschlag (11) mit einem Längsschlitz (13) ausgebildet sind, längs dem das Datenkabel durch radiales Einsetzen in die Stülphülse (5) derart verlegbar ist, dass es an der Einstecköffnung (9), im Verlauf der gesamten Längserstreckung der Stülphülse (5) und an der Austrittöffnung (14) koaxial zur Längsachse der Stülphülse (5) liegen kann, und
einen in den Innenraum (7) eingesetzten, elastisch verformbaren Dichtungskörper (17), insbesondere aus einem Elastomer, wie Gummi, der zum Aufbau der Abdichtung zwischen dem Radialanschlag (11) und dem Endabschnitt axial verpresst ist und einen dem Innenkanal des Kunststoffrohrs (3) zugewandten Stirnabschnitt (27), der zum Abdichten des Innenkanals geformt ist, sowie einen radialanschlagsseitigen Versteifungsabschnitt aufweist.

14. Einzelrohrabdichtung (1) nach Anspruch 13, wobei der Dichtungskörper (17) und der Versteifungsabschnitt mittels eines Zweikomponentenspritzgießverfahrens hergestellt sind.

15. Einzelrohrabdichtung (1) nach Anspruch 14, wobei der Versteifungsabschnitt als ebenes Plättchen ausgebildet ist und in seiner Form an eine radialanschlagsseitige Stirnfläche des Dichtungskörpers (17) angepasst ist.

16. Einzelrohrabdichtung (1) nach einem der vorstehenden Ansprüche, wobei der Hülsenmantel (6) mit einem gegenüber dem Längsschlitz (13) in Umfangsrichtung breiteren Einsetzfenster (15) ausgebildet ist, wobei insbesondere das Einsetzfenster (15) derart dimensioniert ist und/oder das Einsetzfenster (15) und der Dichtungskörper derart aufeinander formabgestimmt sind, dass der Dichtungskörper radial in den Innenraum (7) einsetzbar ist.

17. Einzelrohrabdichtung (1) nach einem der vorstehenden Ansprüche, wobei der Längsschlitz eine konstante Schlitzbreite über seine gesamte Längserstreckung aufweist und/oder wobei eine Schlitzbreite 5% bis 60%, insbesondere 7% bis 55%, 10 % bis 50% oder 15% bis 45%, eines Außendurchmessers des Kunststoffrohrs beträgt.

18. Kunststoffrohr (3), wie Mikrorohr, das einen Innenkanal zum Aufnehmen von wenigstens einem Datenkabel, wie einem Glasfaserkabel, aufweist, umfassend eine nach einem der vorstehenden Ansprüche ausgebildete Einzelrohrabdichtung (1), die an einem Endabschnitt (4) des Kunststoffrohrs (3) montiert ist.
